# EUROPÄISCHE PATENTSCHRIFT

(11) **EP 1 960 079 B1**
(45) Veröffentlichungstag und Bekanntmachung des Hinweises auf die Patenterteilung: **27.01.2010**
(21) Anmeldenummer: 06828596.4
(22) Anmeldetag: 30.11.2006
(51) Int. Cl.: B01D 29/64, B01D 29/82, B01D 29/23, B01D 33/06, B01D 33/76

(54) **REINIGUNGSVORRICHTUNG**
CLEANING APPARATUS
DISPOSITIF DE PURIFICATION

(30) Priorität: 02.12.2005 DE 102005057591
(43) Veröffentlichungstag der Anmeldung: 27.08.2008
(73) Patentinhaber: Mahle International GmbH, 70376 Stuttgart (DE)
(72) Erfinder: GEISBAUER, Heinz, 74629 Pfedelbach (DE)
(74) Vertreter: Bongen, Renaud & Partner
(86) Internationale Anmeldenummer: PCT/DE2006/002141
(87) Internationale Veröffentlichungsnummer: WO 2007/062643

(56) Entgegenhaltungen:
- EP-A2- 0 207 340
- DE-A1- 1 461 453
- DE-A1- 1 536 941

## Beschreibung

Die vorliegende Erfindung betrifft eine Reinigungsvorrichtung zum Entfernen von Feststoffen aus einer Flüssigkeit, insbesondere für einen Kühl-Schmierstoff-Kreis, mit den Merkmalen des Anspruchs 1. Die Erfindung betrifft außerdem eine Reinigungsanlage, die mit wenigstens zwei derartigen Reinigungsvorrichtungen ausgestattet ist.

Aus der DE 15 36 941 ist eine Reinigungsvorrichtung der Eingangs genannten Art bekannt. Sie umfasst einen liegend angeordneten hohlzylindrischen Filterkörper, der einen Rohraum von einem Reinraum trennt. Ein rohseitiger Zulauf ist mit dem Rohraum verbunden, während ein reinseitiger Ablauf mit dem Reinraum verbunden ist. Die Reinigungsvorrichtung ist mit einer Rückspüleinrichtung zum segmentweisen Rückspülen des Filterkörpers ausgestattet sowie mit einer Austrageinrichtung zum Entfernen abgereinigter Feststoffe aus dem Rohraum. Der Filterkörper umhüllt den Rohraum, während der Reinraum den Filterkörper umhüllt. Die Austrageinrichtung weist bei der bekannten Reinigungsvorrichtung einen Schneckenförderer auf, der die abgereinigten Feststoffe einer Austragöffnung zuführt.

Aus der DE 102 52 785 A1 ist eine weitere Reinigungsvorrichtung bekannt, die einen hohlzylindrischen Filterkörper aufweist, der in einem Gehäuse einen Rohraum von einem Reinraum trennt. Ein rohseitiger Zulauf ist mit dem Rohraum verbunden, während ein reinseitiger Ablauf mit dem Reinraum verbunden ist. Des Weiteren ist die Reinigungsvorrichtung mit einer Rückspüleinrichtung ausgestattet, mit deren Hilfe der Filterkörper segmentweise rückspülbar ist. Das bedeutet, dass die Rückspüleinrichtung den Filterkörper an der Reinseite mit einem geeigneten Rückspülmedium beaufschlagt, das den Filterkörper entgegen der Filtrierrichtung durchströmt. Des Weiteren ist eine Austrageinrichtung vorhanden, mit deren Hilfe abgereinigte Feststoffe aus dem Rohraum entfernt werden können.

Bei der bekannten Reinigungsvorrichtung umhüllt der Filterkörper den Reinraum, während der Rohraum den Filterkörper umhüllt. Die Filtrierrichtung des Filterkörpers ist somit von außen nach innen orientiert. Im Betrieb der Reinigungsvorrichtung lagern sich Verunreinigung an der Rohseite des Filterkörpers an. Die Rückspüleinrichtung spült diese Ablagerungen ab. Bei der bekannten Reinigungsvorrichtung ist der Filterkörper stehend, also mit in Schwerkraftrichtung orientierter Längsmittelachse angeordnet. Die mit Hilfe der Rückspülung in den außenliegenden Rohraum gespülten Verunreinigungen sinken - sofern sie sich nicht erneut an den Filterkörper anlegen - schwerkraftbedingt im Rohraum nach unten. Das Gehäuse enthält einen Sumpf, in dem sich die abgereinigten Feststoffe anreichern. Die Austrageinrichtung ist bei der bekannten Reinigungsvorrichtung im wesentlichen durch eine am unteren Ende des Gehäuses angeordnete Austragöffnung gebildet, durch welche der Sumpf aus dem Rohraum abgelassen werden kann. Der Filtrierbetrieb muss hierzu kurz unterbrochen werden, da sonst bei geöffneter Austragöffnung die verunreinigte Flüssigkeit durch die Austragöffnung aus dem Rohraum ausströmen würde.

Die vorliegende Erfindung beschäftigt sich mit dem Problem, für eine Reinigungsvorrichtung der eingangs genannten Art eine andere oder eine verbesserte Ausführungsform anzugeben, bei der insbesondere das Entfernen der abgereinigten Feststoffe vereinfacht ist.

Dieses Problem wird erfindungsgemäß durch die Gegenstände der unabhängigen Ansprüche gelöst. Vorteilhafte Ausführungsformen sind Gegenstand der abhängigen Ansprüche.

Die erfindungsgemäße Reinigungsvorrichtung beruht auf dem allgemeinen Gedanken, den Filterkörper so auszugestalten, dass seine Filtrierrichtung von innen nach außen orientiert ist, und die abgereinigten Feststoffe mit Hilfe eines Schneckenförderers einer Austragöffnung zuzuführen. Durch den erfindungsgemäßen Aufbau ist es möglich, den Filterkörper liegend, also im wesentlichen mit quer zur Schwerkraftrichtung orientierten Längsmittelachse anzuordnen, was für viele Anwendungsfälle von Vorteil sein kann. Die mit dem Schneckenförderer ausgestattete Austrageinrichtung arbeitet unabhängig von der Schwerkraftrichtung und kann daher auch bei liegend angeordnetem Filterkörper die abgereinigten Festkörper der Austragöffnung zuführen. Desweiteren ermöglicht der erfindungsgemäße Aufbau grundsätzlich ein Ablassen der verschmutzten Flüssigkeit aus dem Rohraum vor dem Öffnen der Austragöffnung, wodurch die abgereinigten Feststoffe quasi trocken entnommen werden können.

Die erfindungsgemäße Reinigungsanlage beruht auf dem allgemeinen Gedanken, zumindest zwei Reinigungsvorrichtungen parallel in einen Flüssigkeitskreis einzubinden und diese mit Hilfe einer Zulaufventilanordnung hinsichtlich ihres Filtrierbetriebs wechselweise zu aktivieren und für eine bequeme und ungestörte Abreinigung zu deaktivieren. Auf diese Weise kann der Filtrierbetrieb der Reinigungsanlage ohne Unterbrechung fortgesetzt werden, auch dann, wenn zumindest eine der Reinigungsvorrichtungen zum Entfernen der abgereinigten Feststoffe vorübergehend hinsichtlich ihres Filtrierbetriebs deaktiviert ist. Bei deaktiviertem Filtrierbetrieb kann dennoch die Rückspülung aktiv sein, was die Reinigung der jeweiligen Reinigungsvorrichtung besonders effektiv gestaltet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils einen vereinfachten Längsschnitt durch eine nicht von den Ansprüchen umfasste Reinigungsvorrichtung bei verschiedenen Aus- führungsformen,
- Fig. 3 bis 14: jeweils einen vereinfachten Längsschnitt durch eine Reinigungsvorrichtung nach der Erfindung, jedoch bei verschiedenen Ausfüh- rungsformen,
- Fig. 15: einen Querschnitt der Reinigungsvorrichtung entsprechend den Ausführungsformen der Fig. 1 bis 4,
- Fig. 16: einen Querschnitt der Reinigungsvorrichtung entsprechend der Ausführungsform gemäß Fig. 5,
- Fig. 17: einen Querschnitt der Reinigungsvorrichtung entsprechend der Ausführungsform gemäß Fig. 13,
- Fig. 18: einen Querschnitt der Reinigungsvorrichtung entsprechend der Ausführungsform gemäß Fig. 14,
- Fig. 19 bis 24: schaltplanartige, stark vereinfachte Prin- zipdarstellungen der Reinigungsvorrichtung bei verschiedenen Ausführungsformen,
- Fig. 25: eine Draufsicht auf eine Reinigungsanlage nach der Erfindung.

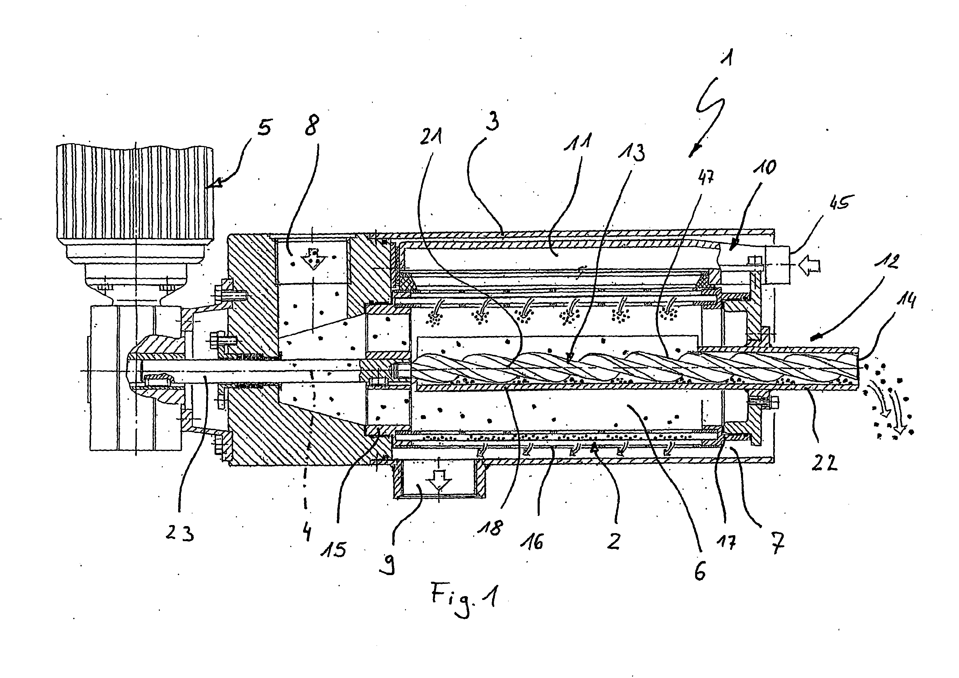

Entsprechen den Fig. 1 bis 7 umfasst eine erfindungsgemäße Reinigungsvorrichtung 1 einen hohlzylindrischen Filterkörper 2. Dieser Filterkörper 2 ist in einem Gehäuse 3 um seine Längsmittelachse 4 drehbar gelagert. Zum Antrieb des Filterkörpers 2 ist eine Antriebseinrichtung 5 vorgesehen, die beispielsweise einen Elektromotor umfasst.

Der Filterkörper 2 trennt im Gehäuse 3 einen Rohraum 6 von einem Reinraum 7. Dabei ist bei der erfindungsgemäßen Reinigungsvorrichtung 1 der Rohraum 6 im Inneren des Filterkörpers 2 angeordnet und somit vom Filterkörper 2 umhüllt. Im Unterschied dazu ist der Filterkörper 2 im Reinraum 7 angeordnet, so dass der Reinraum 7 den Filterkörper 2 umhüllt. Der Rohraum 6 ist mit einem rohseitigen Zulauf 8 verbunden. Auf entsprechend Weise ist der Reinraum 7 mit einem reinseitigen Ablauf 9 verbunden.

Der Filterkörper 2 ist demnach so ausgestaltet, dass seine Filtrierrichtung von innen nach außen orientiert ist. Der Filterkörper 2 kann beispielsweise als Kantenspaltfilter ausgestaltet sein. Es sind jedoch auch andere geeignete Filterkonstruktionen möglich.

Die Reinigungsvorrichtung 1 dient zum Entfernen von Feststoffen aus einer Flüssigkeit. Bei dieser Flüssigkeit handelt es sich vorzugsweise um einen Kühl-Schmierstoff, z.B. eines Kühl-Schmierstoff-Kreises einer Maschine zur spanabhebenden Bearbeitung eines Werkstücks. Die Reinigungsvorrichtung 1 ist dann zweckmäßig in einen derartigen Kühl-Schmierstoff-Kreis eingesetzt, um den teureren Kühl-Schmierstoff von den zwangsläufig mitgeführten Feststoffen zu befreien.

Die Reinigungsvorrichtung 1 umfasst außerdem eine Rückspüleinrichtung 10, mit deren Hilfe der Filterkörper 2 segmentweise rückspülbar ist. Bei Rückspülen wird der Filterkörper 2 entgegen seiner Filtrierrichtung mit einer Rückspülströmung beaufschlagt, die dann den Filterkörper 2 von außen nach innen durchströmt. Zu diesem Zweck umfasst die Rückspüleinrichtung 10 bei den hier gezeigten Ausführungsformen jeweils eine Rückspüldüse 11, die sich im wesentlichen über die gesamte axiale Länge des Filterkörpers 2 erstreckt. Mit Hilfe der Rückspüldüse 11 kann dann ein Umfangssegment des Filterkörpers 2 mit einer Rückspülströmung beaufschlagt werden. Als Rückspülmedium eignet sich beispielsweise ein Spülgas, wie z.B. Pressluft, oder eine Flüssigkeit, wozu zweckmäßig die mit Hilfe der Reinigungsvorrichtung 1 gereinigte Flüssigkeit verwendet wird.

Die erfindungsgemäße Reinigungsvorrichtung 1 ist außerdem mit einer Austrageinrichtung 12 ausgestattet, mit deren Hilfe die abgereinigten Feststoffe aus dem Rohraum 6 entfernt werden können. Erfindungsgemäß umfasst diese Austrageinrichtung 12 einen Schneckenförderer 13, der im Betrieb der Reinigungsvorrichtung 1 abgereinigte Feststoffe einer Austragöffnung 14 zuführt. Durch diese Austragöffnung 14 können somit die abgereinigten Feststoffe aus dem Rohraum 6 entnommen werden. Dabei ist diese Austragöffnung 14 vom Rohraum 6 beabstandet angeordnet und insbesondere aus dem Gehäuse 3 herausgeführt. Die Austragöffnung 14 ist somit von einer Außenseite des Gehäuses 3 her zugänglich. Der Schneckenförderer 13 transportiert die Feststoffe aus dem an sich urizugänglichen Rohraum 6 bis zur Austragöffnung 14 und vereinfacht dadurch das Entfernen der Feststoffe aus dem Rohraum 6.

Die erfindungsgemäße Reinigungsvorrichtung 1 eignet sich in besondere Weise für eine liegende Montage, bei der wie in den gezeigten Ausführungsbeispielen die Längsmittelachse 4 des Filterkörpers 2 im wesentlichen horizontal und somit im wesentlichen quer zur Schwerkraftrichtung orientiert ist.

Bei den hier gezeigten Ausführungsformen ist der Filterkörper 2 bezüglich seiner Längsrichtung in zumindest drei axiale Abschnitte unterteilt. Ein erster axialer Endabschnitt 15 ist von der Austragöffnung 14 abgewandt oder entfernt und ist am Gehäuse 3 drehbar gelagert. An diesen ersten Endabschnitt 15 schließt axial ein axialer Filterabschnitt 16 an, der die eigentliche Filterstruktur enthält und der radial durchströmbar ist. An den Filterabschnitt 16 schließt axial ein zweiter Endabschnitt 17 an, der der Austragöffnung 14 zugewandt ist bzw. in deren Nähe angeordnet ist. Auch der zweite Endabschnitt 17 ist am Gehäuse 3 drehbar gelagert.

Zweckmäßig erstreckt sich nun die Rückspüldüse 11 im wesentlichen über die gesamte axiale Länge des Filterabschnitts 16 und kann auf diese Weise den Filterabschnitt 16 von außen mit der Rückspülströmung beaufschlagen, und zwar im jeweils rückzuspülenden Umfangssegment des Filterabschnitts 16.

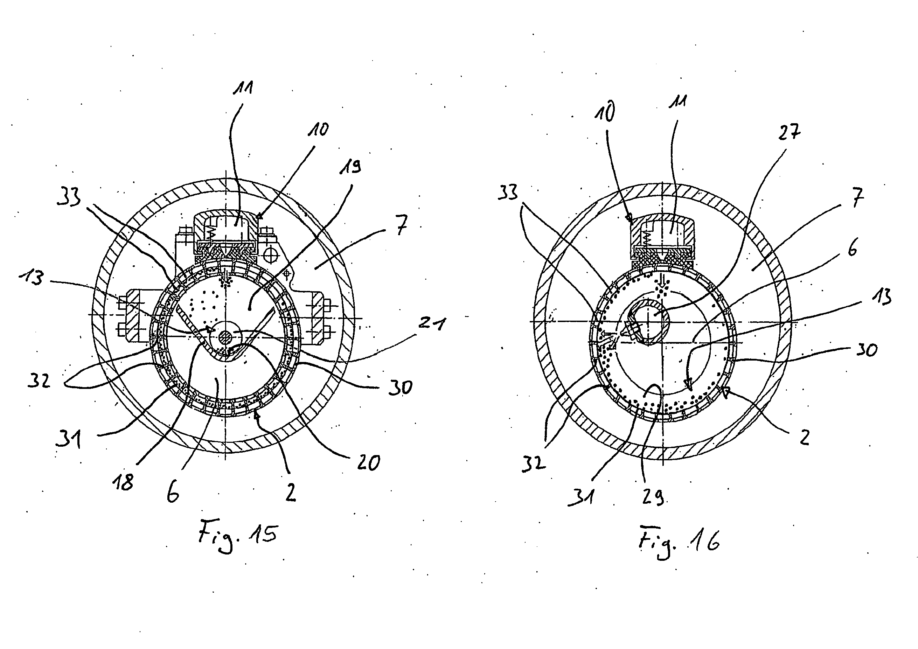

Bei den Ausführungsformen der Fig. 1 bis 4 und 6 sowie 7 umfasst die Austrageinrichtung 12 außerdem eine Rinne 18, die im Rohraum 6, also im Inneren des Filterkörpers 2 angeordnet ist. Diese Rinne 18 erstreckt sich im wesentlichen über die gesamte axiale Länge des Filterabschnitts 16. Dabei ist die Rinne 18 zweckmäßig bezüglich der Rückspüldüse 11 radial gegenüberliegend angeordnet, wobei sich Rinne 18 und Rückspüldüse 11 zweckmäßig im wesentlichen parallel zueinander erstrecken. Die Rinne 18 ist definitionsgemäß mit einer offenen axialen Längsseite versehen. Die so gebildete Längsöffnung ist in Fig. 15 mit 19 bezeichnet. Die Rinne 18 besitzt im Querschnitt zweckmäßig ein Profil, das sich gemäß Fig. 15 von der Längsöffnung 19 bis zu einem Grund 20 der Rinne 18 hin verjüngt.

Die Rinne 18 ist somit entgegen der Schwerkraftrichtung, also nach oben offen, während die Rückspüldüse 11 in Schwerkraftrichtung, also nach unten rückspült. Hierdurch wird erreicht, dass Feststoffe, die beim Rückspülen von der Innenwand des Filterkörpers 2 abgelöst werden können, schwerkraftbedingt nach unten in die Rinne 18 absinken können. Die Rinne 18 kann somit einen Großteil der mit Hilfe der Rückspüleinrichtung 10 vom Filterkörper 2 abgelösten Feststoffe auffangen. Zu diesem Zweck erstreckt sich die Rinne 18 außerdem im wesentlichen vom ersten Endabschnitt 15 bis etwa zum zweiten Endabschnitt 17.

Bei den Ausführungsformen der Fig. 1 bis 4 weist der Schneckenförderer 13 eine Schneckenwelle 21 auf, die drehend antreibbar ist. Dabei erstreckt sich die Schneckenwelle 21 entlang des Grundes 20 der Rinne 18, und zwar zweckmäßig entlang der gesamten axialen Länge der Rinne 18. Auf diese Weise kann die Schneckenwelle 21 die sich am Grund 20 der Rinne 18 sammelnden Feststoffe in Richtung Austragöffnung 14 transportieren. Bei den hier gezeigten, bevorzugten Ausführungsformen kann die Austrageinrichtung 12 außerdem mit einem Rohr 22 ausgestattet sein, das sich im Bereich des zweiten Endabschnitts 17 direkt an die Rinne 18 anschließt. Dieses Rohr 22 führt zur Austragöffnung 14 bzw. weist die Austragöffnung 14 auf. Die Schneckenwelle 21 erstreckt sich auch innerhalb des Rohrs 22, und zwar zweckmäßig bis zur Austragöffnung 14 bzw. bis in deren Nähe. Auf diese Weise fördert die Schneckenwelle 21 die sich in der Rinne 18 ansammelnden Feststoffe durch das Rohr 22 bis zur Austragöffnung 14.

Bei den hier gezeigten, bevorzugten Ausführungsformen ist die Schneckenwelle 21 ebenfalls mit Hilfe der Antriebseinrichtung 5 antriebsgekoppelt, so dass die Antriebseinrichtung 5 sowohl die Schneckenwelle 21 als auch den Filterkörper 2 drehend antreibt. Beispielsweise treibt die Antriebseinrichtung 5 eine Antriebswelle 23 an, die sowohl mit der Schneckenwelle 21 als auch mit dem Filterkörper 2 drehfest verbunden ist.

Bei der Ausführungsform gemäß Fig. 1 ist das Gehäuse 3 axial offen. Die hier gezeigte Reinigungsvorrichtung 1 eignet sich somit für einen Einbau in einen Vorratsbehälter für gereinigte Flüssigkeit, wobei die Reinigungsvorrichtung 1 im wesentlichen vollständig in die gereinigte Flüssigkeit eingetaucht ist.

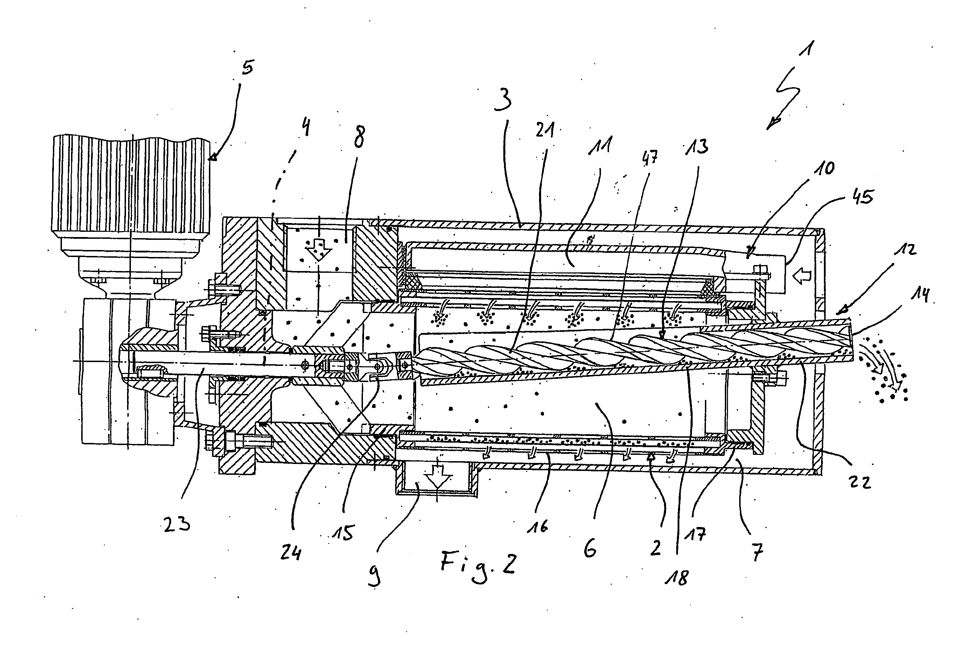

Im Unterschied dazu ist bei den Ausführungsformen der Fig. 2 bis 7 das Gehäuse 3 verschlossen, wodurch die Reinigungsvorrichtung 1 grundsätzlich an einer beliebigen Stelle in einen Kreis der zu reinigenden Flüssigkeit eingebaut werden kann.

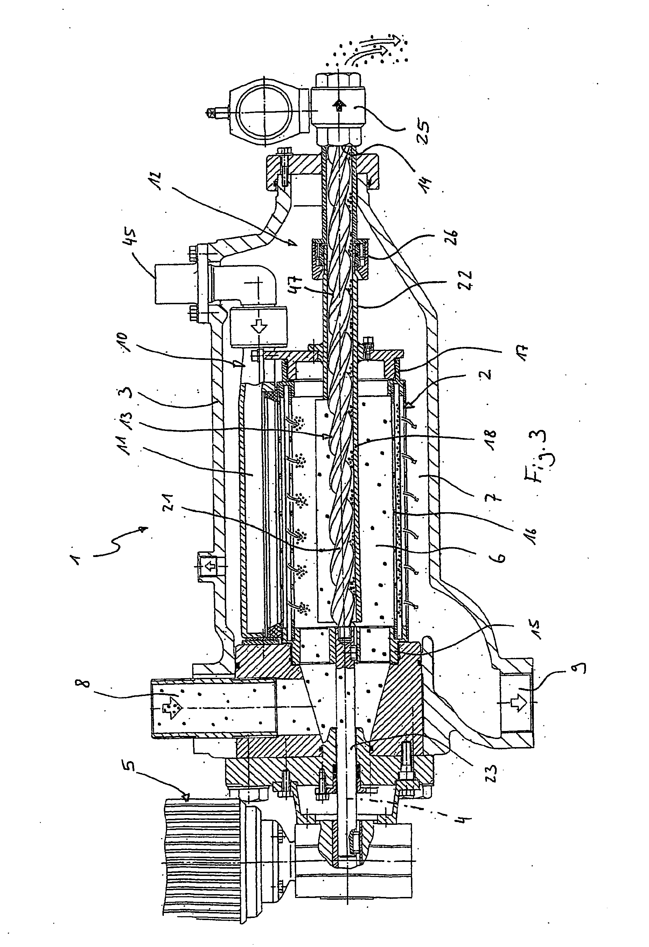

Bei den Ausführungsformen der Fig. 1 und 3 erfolgt die Montage der Reinigungsvorrichtung 1 jeweils so, dass sich die Dreh- und Längsmittelachse 4 des Filterkörpers 2 mit einer geringen Neigung gegenüber einer Horizontalebene erstreckt. Diese Neigung beträgt dabei z.B. weniger als 15° und vorzugsweise weniger als 10° gegenüber der Horizontalen. Auf diese Weise ist gewährleistet, dass die Feststoffe bei deaktiviertem Filtrierbetrieb im wesentlichen trocken aus der dann geöffneten Austragöffnung 14 ausgetragen werden können.

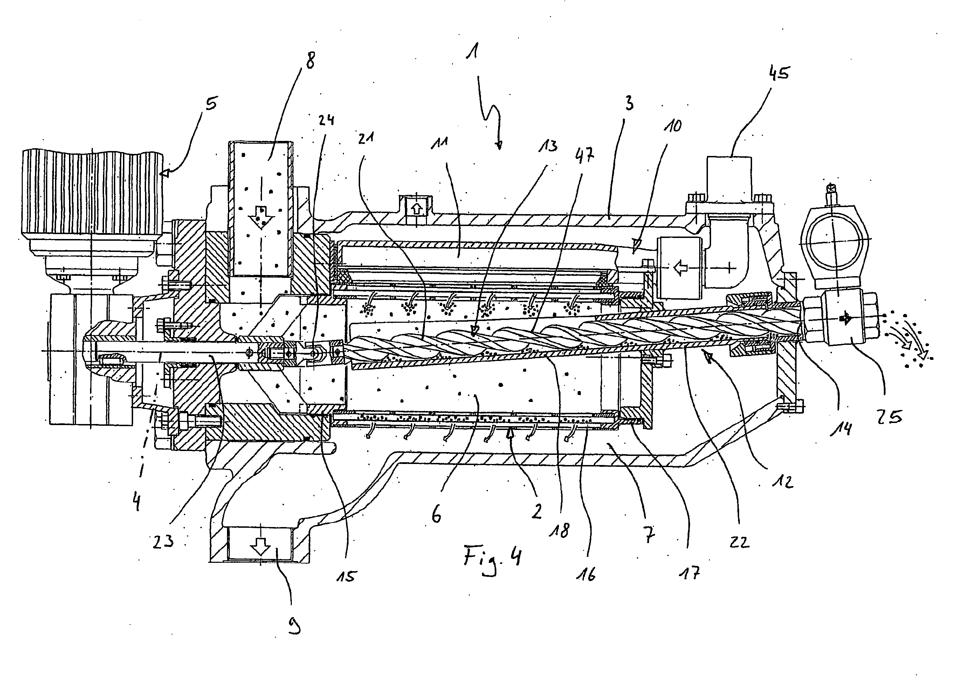

Bei den Ausführungsformen der Fig. 2 und 4 ist die Reinigungsvorrichtung 1 so angeordnet, dass sich die Dreh- und Längsmittelachse 4 des Filterkörpers 2 im wesentlichen parallel zu einer Horizontalebene erstreckt. Dagegen verläuft nur noch die Rinne 18 gegenüber dieser Horizontalebene geringfügig geneigt, also z.B. maximal bis 15°. Da die Antriebswelle 23 koaxial zur Drehachse 4 angeordnet ist, umfasst die Antriebskopplung zwischen der Antriebswelle 23 und der Schneckenwelle 21 ein Gelenk 24, das insbesondere als Kardangelenk ausgestaltet ist.

Die Schneckenwelle 21 ist einenends über die Antriebswelle 4 und anderenends im Rohr 22 gelagert. Weitere Lagerungsmaßnahmen sind entbehrlich. Gemäß einer bevorzugten Ausführungsform kann die Schneckenwelle 21 eine Wendelbürste aufweisen, so dass die sich in der Rinne 18 ansammelnden Feststoffe entlang der Rinne 18 durch die Rotation der Schneckenwelle 21 zur Austragöffnung 14 hin ausgebürstet werden.

Entsprechend den Fig. 3 und 4 kann die Austragöffnung 14 mit Hilfe eines Austragventils 25 gesteuert werden. Bei geschlossenem Austragventil 25 ist die Austragöffnung 14 verschlossen, wodurch Leckagen durch die Austragsöffnung 14 im Betrieb der Reinigungsvorrichtung 1 vermieden werden können. Bei geöffnetem Austragventil 25 ist die Austragöffnung 14 offen, so dass die Feststoffe durch die Austragöffnung 14 und durch das Austragventil 25 abgeführt werden können. Hierbei kann der im Rohraum 6 üblicherweise herrschende Überdruck vorteilhaft genutzt werden. Denn beim Öffnen des Austragventils 25 kann eine größere Ansammlung von Feststoffen, die durch den permanenten Betrieb des Schneckenförderers 13 an der Austragöffnung 14 entsteht, nach dem Druckstoßprinzip ausgetragen werden. Auf diese Weise lässt sich das Entfernen der Feststoffe aus dem Rohraum 6 optimieren.

Bei den Ausführungsformen der Fig. 3 und 4 enthält das Rohr 22 ein Axiallager 26. Dieses Axiallager 26 ermöglicht zum einen einen axialen Längenausgleich, der sich aufgrund thermisch bedingter Ausdehnungseffekte einstellen kann. Zum anderen vereinfacht das Axiallager 26 die Montage der Reinigungsvorrichtung 1.

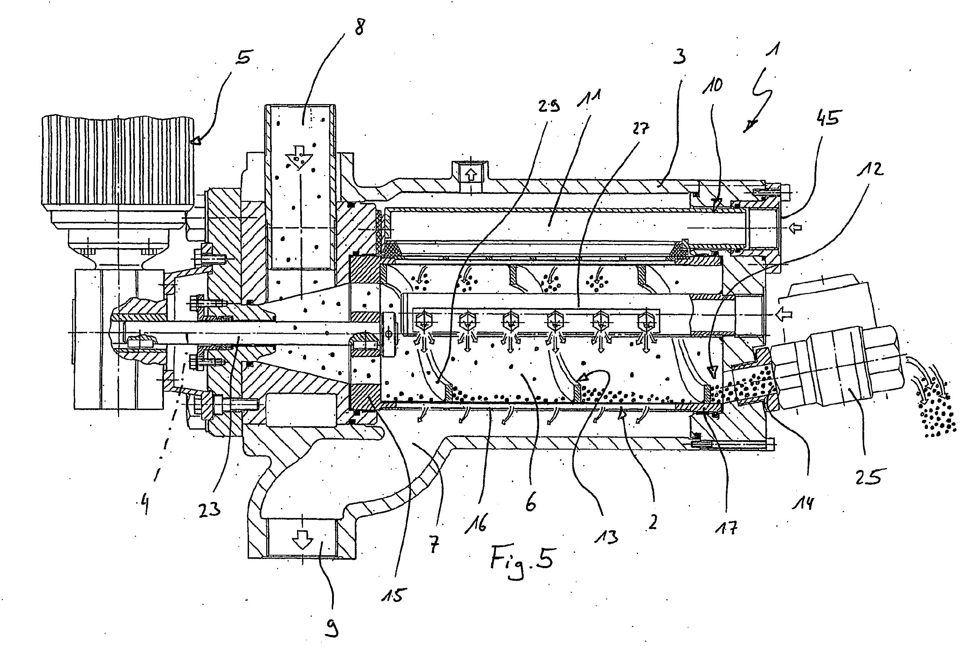

Die Reinigungsvorrichtung 1 kann außerdem mit einer Spüldüse 27 ausgestattet sein, die im Rohraum 6, also im Inneren des Filterkörpers 2 angeordnet ist und mit deren Hilfe ein Umfangssegment des Filterkörpers 2 zum Abspülen der daran anhaftenden Feststoffe mit einer Spülströmung beaufschlagbar ist. Exemplarisch ist eine derartige Spüldüse 27 bei der in Fig. 5 dargestellten Ausführungsform wiedergegebenen. Dabei ist klar, dass eine derartige Spüldüse 27 grundsätzlich bei jeder der hier gezeigten Ausführungsformen zur Anwendung kommen kann, um die Reinigungswirkung der Rückspüleinrichtung 10 zu unterstützen.

Vorzugsweise erstreckt sich die Spüldüse 27 entlang der gesamten axialen Länge des Filterabschnitts 16. Als Spülmedium wird zweckmäßig das selbe Medium verwendet, das auch als Rückspülmedium dient, also vorzugsweise reinseitig entnommene Flüssigkeit. Bei den Ausführungsformen der Fig. 1 bis 4 weist die Rinne 18 im Bereich des ersten Endabschnitts 15 ein axial offenes Ende auf. Die Rinne 18 ist bei diesen Ausführungsformen über das Rohr 22 am Gehäuse 3 befestigt.

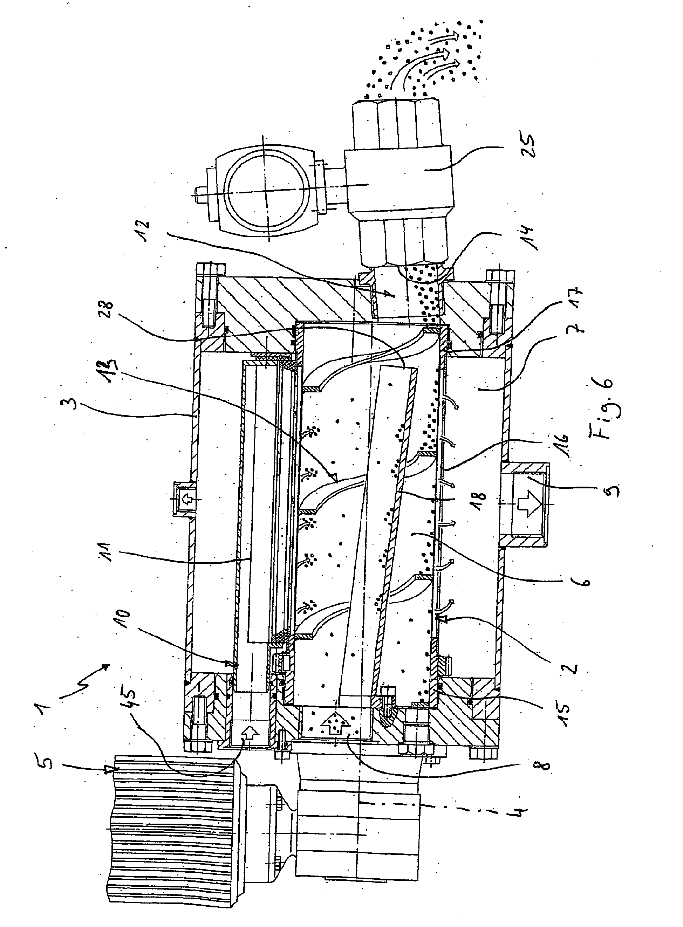

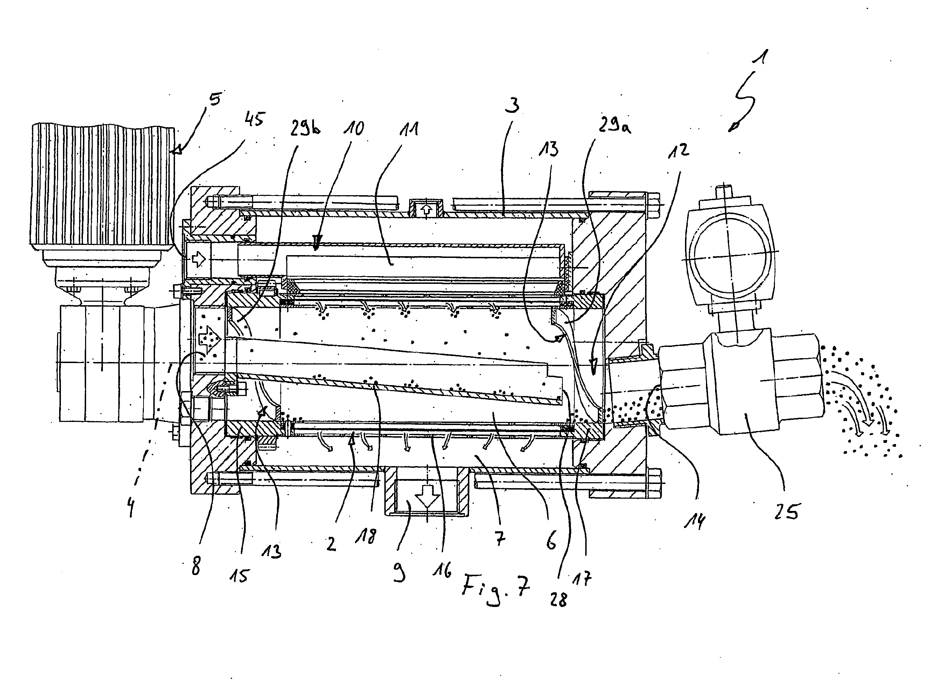

Im Unterschied dazu ist bei den Ausführungsformen der Fig. 6 und 7 die Rinne 18 im Bereich des ersten Endabschnitts 15 am Gehäuse 3 befestigt. Die Rinne 18 erstreckt sich bei diesen Ausführungsformen vom ersten Endabschnitt 15 bis zum zweiten Endabschnitt 17 und endet dort freistehend. Die Rinne 18 besitzt dabei im Bereich des zweiten Endabschnitts 17 ein axial offenes Ende 28. Desweiteren ist die Rinne 18 bei diesen Ausführungsformen gegenüber der Horizontalen so geneigt, dass Feststoffe, die sich in der Rinne 18 sammeln, angetrieben durch die Schwerkraft von selbst in Richtung des genannten freien Endes 28 bewegen und dort von der Rinne 18 herabfallen und auf die Innenwand des Filterkörpers 2 treffen. Durch die Positionierung des freien Endes 28 der Rinne 18 im Bereich des zweiten Endabschnitts 17 fallen die von der Rinne 18 abgeführten Feststoffe auf einen nicht durchströmbaren Abschnitt des Filterkörpers 2, nämlich auf den dem zweiten Endabschnitt 17 zugeordneten Bereich der Innenwand des Filterkörpers 2.

Bei den Ausführungsformen der Fig. 5 bis 7 weist der Schneckenförderer 13 zumindest einen wendelförmigen Steg 29 auf. Dieser Steg 29 ist an der Innenseite des Filterkörpers 2 angebracht und steht im Profil radial nach innen ab. Der Steg 29 erstreckt sich bei den Ausführungsformen der Fig. 5 und 6 jeweils im wesentlichen über die gesamte axiale Länge des Filterabschnitts 16. Dabei windet sich der Steg 29 wendelförmig oder schraubenförmig vom ersten Endabschnitt 15 bis zum zweiten Endabschnitt 17. Bei den Ausführungsformen der Fig. 5 und 6 ist dabei jeweils nur ein einziger Steg 29 vorgesehen, der sich durchgehend vom ersten Endabschnitt 15 bis zum zweiten Endabschnitt 17 erstreckt. Durch die Rotation des Filterkörpers 2 führt der wendelförmige Steg 29 den Schneckenvortrieb durch und bildet dadurch den Schneckenförderer 13.

Bei der Ausführungsform gemäß Fig. 7 sind zwei Stege 29 vorgesehen. Der eine Steg 29a erstreckt sich lediglich im Bereich des zweiten Endabschnitts 17 und transportiert somit die von der Rinne 18 in den Bereich dieses zweiten Endabschnitts 17 geförderten Feststoffe in Richtung Austragöffnung 14 ab. Zusätzlich kann ein weiterer Steg 29b vorgesehen sein, der sich lediglich im ersten Endabschnitt 15 erstreckt, in dem keine Abreinigung durch Rückspülung erfolgt. Dieser zweite Steg 29b fördert Feststoffe, die zufällig in diesen ersten Endabschnitt 15 gelangen, in den Bereich des Filterabschnitts 16, in den die Feststoffe insbesondere durch die Rückspülung in die Rinne 18 gelangen. Durch die Rinne 18 werden die sich darin ansammelnden Feststoffe durch das vorgegebene Gefälle zum zweiten Endabschnitt 17 gefördert.

Die in den Ausführungsformen der Fig. 5 bis 7 gezeigten Schneckenförderer 13 sind quasi in den Filterkörper 2 integriert. Im Unterschied dazu bilden die Schneckenförderer 13 der in den Fig. 1 bis 4 gezeigten Ausführungsformen vom Filterkörper 2 unabhängige separate Bauteile. Dabei ist klar, dass das Prinzip des Schneckenförderers 13 gemäß den Ausführungsformen der Fig. 1 bis 4 mit dem Prinzip des Schneckenförderers 13 entsprechend den Ausführungsformen der Fig. 5 bis 7 beliebig kombinierbar ist.

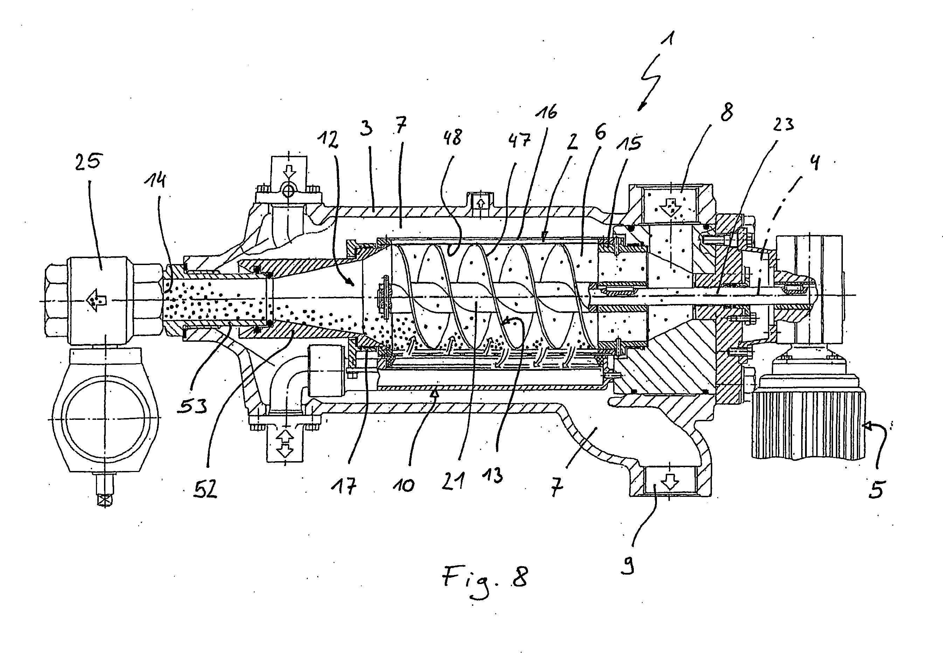

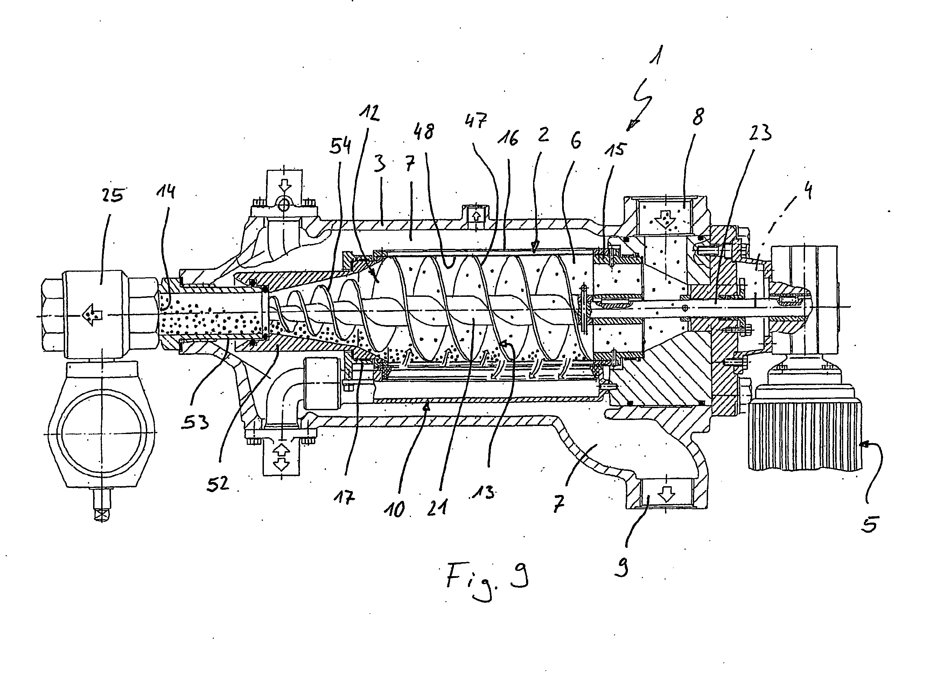

Bei den Ausführungsformen der Fig. 1 bis 4 wirkt die Schneckenwelle 21 bzw. deren Schneckenwindung oder kurz Schnecke 47 mit dem Grund 20 der Rinne 18 zusammen, um die abgereinigten Feststoffe der Austragöffnung 14 zuzuführen. Im Unterschied dazu ist bei den Ausführungsformen der Fig. 8 bis 14 keine solche Rinne 18 vorgesehen; dafür ist die Schnecke 47 der Schneckenwelle 21 bei diesen Ausführungsformen so dimensioniert, dass sie mit einer Innenwand 48 des Filterkörpers 2 zusammenwirkt, um die abgereinigten Verunreinigungen der Austragöffnung 14 zuzuführen. Die Schneckenwelle 21 ist hierbei koaxial zum Filterkörper 2 angeordnet, so dass ein Außenquerschnitt der Schnecke 47 etwa einem Innenquerschnitt der Innenwand 48 entspricht. Schnecke 47 und Innenwand 48 können aneinander anliegen. Bei den Ausführungsformen der Fig. 8 und 9 ist die Schneckenwelle 21 mit der Antriebswelle 23 permanent antriebsgekoppelt, ebenso wie der Filterkörper 2. Bei betätigter Antriebseinrichtung 5 werden somit gleichzeitig Filterkörper 2 und Schneckenwelle 21 mit gleicher Drehzahl angetrieben. In der Folge kommt es bei diesen Ausführungsformen zu keiner Relativbewegung zwischen der Schnecke 47 und der Innenwand 48. Dennoch arbeitet der Schneckenförderer 13 nach Art einer archimedischen Schraube und kann die abgereinigten Fremdstoffe der Austragöffnung 14 zuführen.

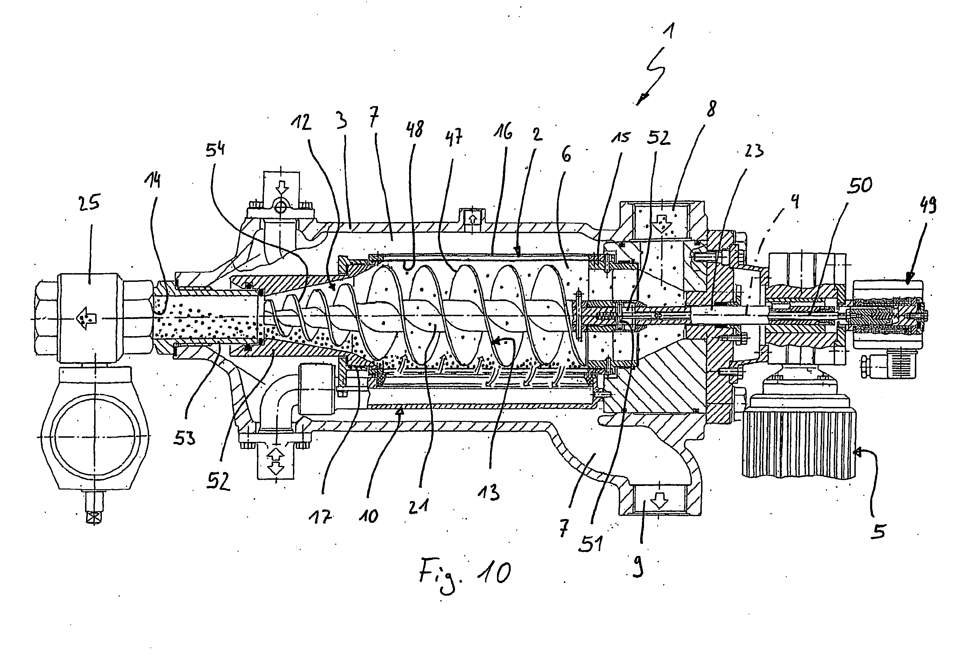

Im Unterschied dazu ist bei den Ausführungsformen der Fig. 10 bis 14 jeweils eine Kupplungseinrichtung 49 vorgesehen. Mit Hilfe dieser Kupplungseinrichtung 49 kann eine Antriebskopplung zwischen der Antriebseinrichtung 5 und dem Filterkörper 2 aktiviert und deaktiviert werden. Im Beispiel ist somit die Schneckenwelle 21 permanent mit der Antriebseinrichtung 5 antriebsgekoppelt, während der Filterkörper 2 mit Hilfe der Kupplungseinrichtung 49 bedarfsabhängig zuschaltbar ist. Ebenso sind Ausführungsformen möglich, bei denen der Filterkörper 2 permanent angetrieben und die Schneckenwelle 21 zuschaltbar ist. Ebenso ist grundsätzlich eine Ausführungsform möglich, bei welcher der Filterkörper 2 und die Schneckenwelle 21 unabhängig voneinander mit der Antriebseinrichtung 5 koppelbar sind.

Im Beispiel ist die Antriebswelle 23 exemplarisch als Hohlwelle ausgestaltet, in der eine Schaltstange 50 axial verstellbar gelagert ist. Diese Schaltstange 50 betätigt einen Mitnehmer 51 in Form eines Querbolzens. In der gezeigten Aktivstellung steht der Mitnehmer 51 über eine entsprechende, nicht näher bezeichnete, komplementäre Mitnehmerkontur mit dem ersten Endabschnitt 15 des Filterkörpers 2 in Eingriff. Dabei durchdringt der Mitnehmer 51 die Antriebswelle 23 in einem Längsschlitz 52, in dem der Mitnehmer 51 mit Hilfe der Schaltstange 50 axial verstellbar ist. Im gezeigten Beispiel ist der Mitnehmer 51 mit Hilfe der Schaltstange 50 in die Aktivstellung gegen die Rückstellkraft einer nicht näher bezeichneten Rückstellfeder gedrückt. Durch Verstellen der Schaltstange 50 in Richtung der Federkraft der Rückstellfeder lässt sich der Mitnehmer 51 in eine Passivstellung verstellen, in der er von besagter Mitnehmerkontur freikommt, wodurch die formschlüssige Kopplung zwischen dem Mitnehmer 51 und dem Filterkörper 2 aufgehoben ist. In der Folge ist nur noch die Schneckenwelle 21 mit der Antriebseinrichtung 5 antriebsverbunden, während der Filterkörper 2 antriebslos ist.

Bei der in Fig. 8 gezeigten Ausführungsform erstreckt sich die Schneckenwelle 21 etwa bis zum zweiten Endabschnitt 17. Die Schnecke 47 erstreckt sich dabei ausschließlich innerhalb des Filterabschnitts 16.

Bei den Ausführungsformen der Fig. 9, 10, 12 und 14 erstreckt sich die Schneckenwelle 21 über den zweiten Endabschnitt 17 hinaus, und zwar bis in einen Übergangsabschnitt 52 hinein. In diesen Übergangsabschnitt 42 geht der Filterkörper 2 an seinem der Austragöffnung 14 zugewandten axialen zweiten Endabschnitt 17 in axialer Richtung über. Dabei ist der Übergangsabschnitt 52 so geformt, dass sich darin der Rohraum 6 mit zunehmender Entfernung von der Austragöffnung 14 konisch oder trichterförmig aufweitet. Der Übergangsabschnitt 52 schafft dabei einen Übergang zwischen dem zylindrischen Filterkörper 2 und einem zylindrischen Rohrabschnitt 53, der an die Austragöffnung 14 angeschlossen ist und einen kleineren Querschnitt aufweist als der Filterkörper 2.

Bei den Ausführungsformen der Fig. 9, 10, 12 und 14 endet die Schneckenwelle 21 im Übergangsabschnitt 52. Die Schnecke 47 ist bei diesen Ausführungsformen mit einem konischen Schneckenabschnitt 54 ausgestattet, der sich innerhalb des Übergangsabschnitts 52 erstreckt und dazu komplementär geformt ist, d.h., der konische Schneckenabschnitt 54 verjüngt sich in Richtung zur Austragöffnung 14.

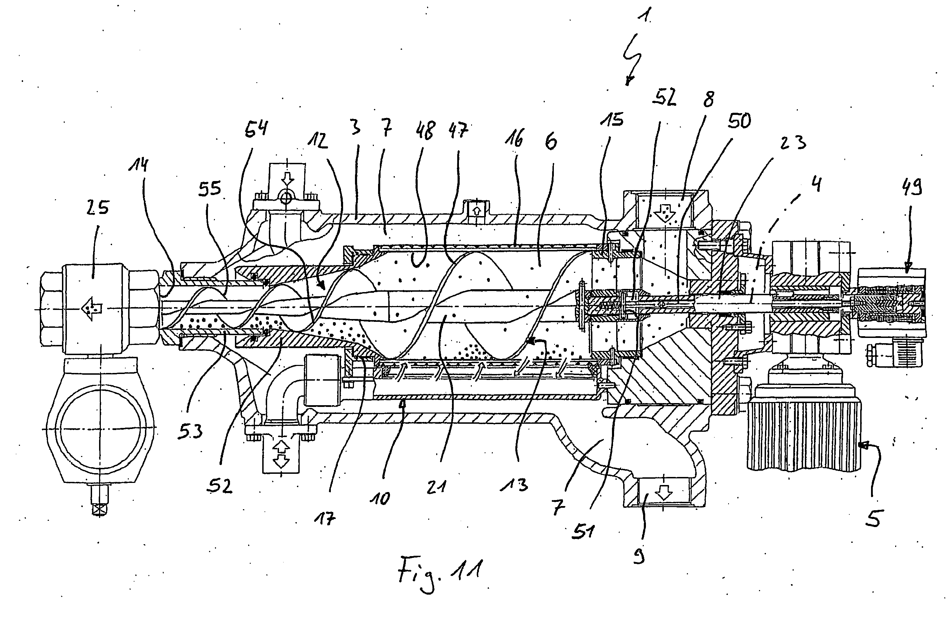

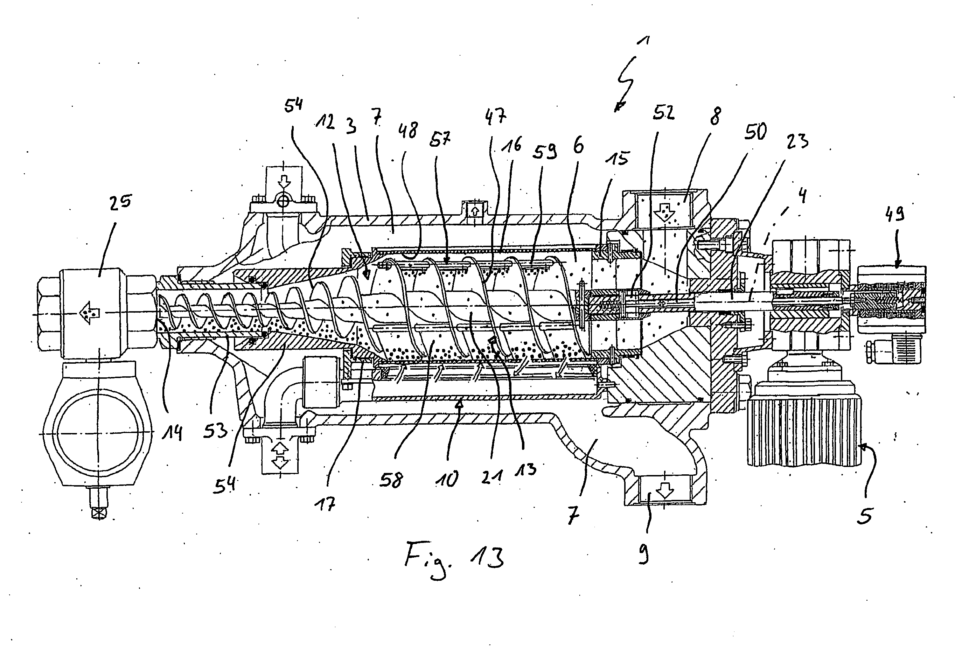

Bei den Ausführungsformen der Fig. 11 und 13 erstrecken sich Schneckenwelle 21 und Schnecke 47 ebenfalls bis in den Übergangsabschnitt 52 hinein. Zusätzlich erstrecken sich die Schneckewelle 21 und die Schnecke 47 bei diesen Ausführungsformen auch bis in den Rohrabschnitt 53 hinein, und zwar vorzugsweise bis unmittelbar an die Austragöffnung 14. Die Schnecke 47 ist hierzu mit einem zum Rohrabschnitt 53 komplementär geformten zylindrischen Schneckenabschnitt 55 ausgestattet. Bei den Ausführungsformen der Fig. 9 bis 14 kann die Schneckenwelle 21 zumindest im Übergangsabschnitt 52 ebenfalls konisch ausgestaltet sein. Insbesondere bei der in Fig. 11 gezeigten Ausführungsform, bei der durch Deaktivieren der Antriebskopplung zwischen Antriebseinrichtung 5 und Filterkörper 2 Relativbewegungen zwischen der Schnecke 47 und der Innenwand 48 möglich sind, kann die Schnecke 47 an ihrer mit der Innenwand 48 zusammenwirkenden, nicht näher bezeichneten Außenkante mit einem nicht gezeigten Abstreifer ausgestattet sein. Dieser Abstreifer kann Fertigungstoleranzen und Lagetoleranzen ausgleichen, kann Beschädigungen der Innenwand 48 und/oder Schnecke 47 verhindern und kann eine effektive Abdichtung zwischen Schnecke 47 und Innenwand 48 erzielen, wodurch die Förderwirkung des Schneckenförderers 13 verbessert ist.

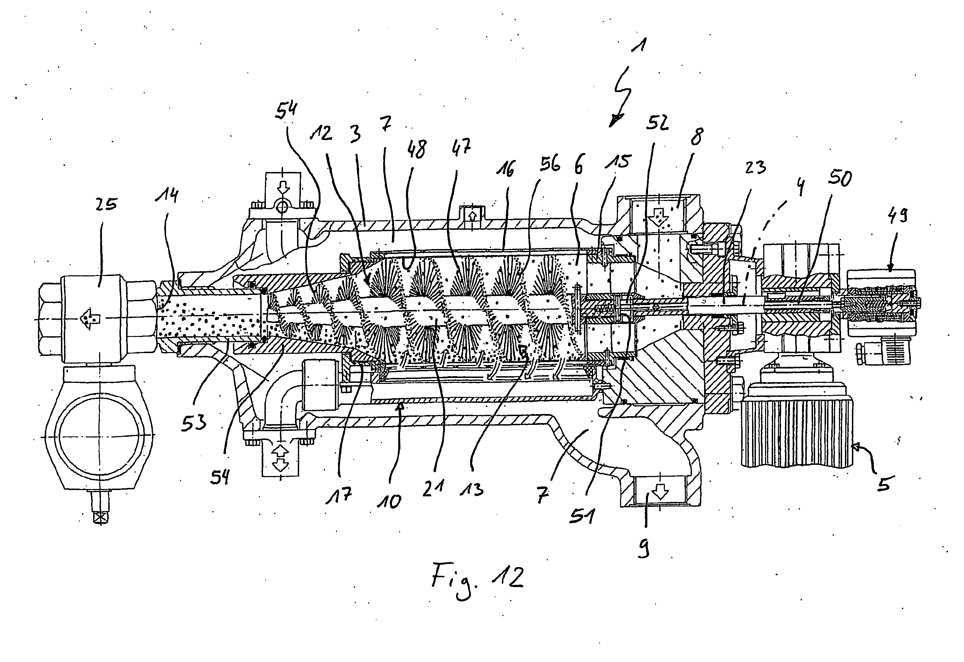

Während bei den Ausführungsformen der Fig. 1 bis 4 und 8 bis 11, sowie 13 und 14 die Schnecke 47 aus einem relativ steifen Werkstoff, insbesondere Blech oder Kunststoff hergestellt ist, kann entsprechend Fig. 12 bei einer anderen Ausführungsform die Schnecke 47 durch flexible Borsten 56 gebildet sein. Die Schneckenwelle 21 trägt somit eine schneckenförmige Bürste. Neben der Förderwirkung besitzt diese Schnecke 47 eine verbesserte Abreinigungswirkung, da sie bei Relativbewegungen zwischen der Schnecke 47 und der Innenwand 48 zusätzlich die Innenwand 48 mit ihren Borsten 56 bürstet.

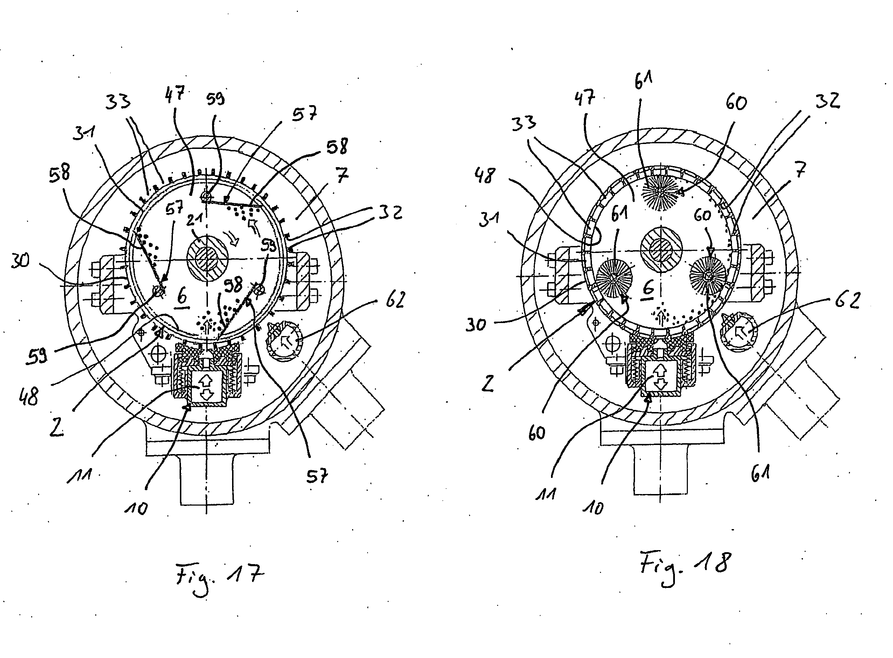

Entsprechend den Fig. 13 und 17 kann die Schnecke 47 mit einer Schaberanordnung 57 ausgestattet sein. Beispielsweise umfasst diese Schaberanordnung 57 drei in Umfangsrichtung verteilt angeordnete Schaber 58, die mit der Innenwand 48 zum Abschaben der daran anhaftenden Verunreinigungen zusammenwirken, sofern eine Relativdrehung zwischen der Schneckewelle 21 und dem Filterkörper 2 stattfindet. Die Schaber 58 sind dabei beispielsweise an stabförmigen Schaberträgern 59 befestigt, die ihrerseits an der Schnecke 47 befestigt sind.

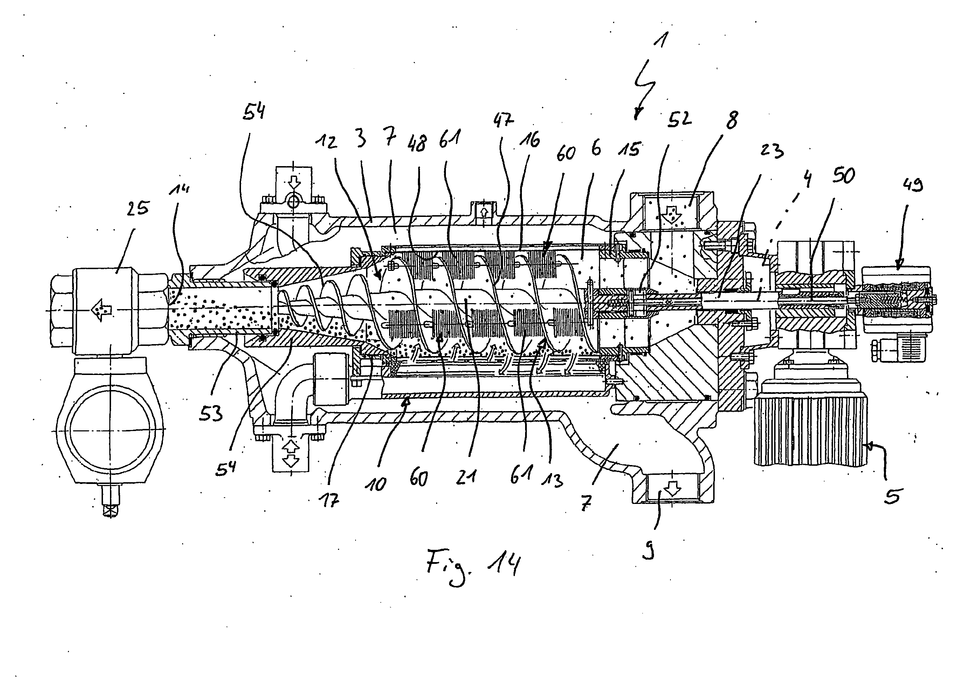

Bei der in den Fig. 14 und 18 gezeigten Ausführungsform ist die Schnecke 47 mit einer Bürstenanordnung 60 ausgestattet, die beispielsweise mehrere, in Umfangsrichtung verteilt an der Schnecke 47 angeordnete Rundbürsten 61 aufweist. Auch die Bürstenanordnung 60 dient zur Abreinigung der Innenwand 48 im Falle von Relativbewegungen zwischen dem Filterkörper 2 und der Schneckenwelle 21 bzw. zwischen der Innenwand 48 und der jeweiligen Rundbürste 61.

Entsprechend den Fig. 15 und 16 weist der Filterkörper 2 zweckmäßig eine Tragstruktur 30 auf, die das eigentliche Filtermaterial 31 trägt. Wie bereits weiter oben erläutert, kann dieses Filtermaterial 31 grundsätzlich eine beliebige, geeignete Konstruktion und/oder Beschaffenheit aufweisen. Bevorzugt ist das Filtermaterial 31 jedoch ein eng gewickelter profilierter Draht, um den Filterkörper 2 als Kantenspaltfilter auszugestalten.

Die Tragstruktur 30 ist mit Hilfe einer Vielzahl von radialen Stegen 32 in Umfangsrichtung segmentiert, wobei sämtliche Segmente 33 radial durchströmbar sind. Durch die Stege 32 ist jedoch ein Flüssigkeitsaustausch zwischen benachbarten Segmenten 33 in Umfangsrichtung nicht möglich. Die Rückspüldüse 11 arbeitet segmentweise, das heißt, dass die Rückspüldüse 11 stets nur ein einziges Umfangssegment 33 spült. Hierdurch kann die Wirkung der Rückspülströmung auf das jeweilige Segment 33 konzentriert werden, was einerseits die Reinigungswirkung verbessert und andererseits den Volumenstrom an Rückspülmedium reduziert.

In Fig. 16 ist zusätzlich erkennbar, dass die Spüldüse 27 gegenüber der Innenwand des Filterkörpers 2 so positioniert sein kann, dass der erzeugte Spülstrahl einen spitzen Winkel gegenüber der angestrahlten Innenwand des Filterkörpers 2 einschließt. Hierdurch ergibt sich eine Abschälwirkung nach Art eines Schabers. Die Spüldüse 27 und/oder die Rückspüldüse 11 können vorzugsweise als Hochdruckdüse ausgestaltet sein, so dass das Rückspülmedium mit Hochdruck gegen die Außenwand des Filterkörpers 2 bzw. das Spülmedium mit Hochdruck gegen die Innenwand des Filterkörpers 2 angetrieben ist.

Wie den Fig. 17 und 18 entnehmbar ist, kann im Reinraum 7 zusätzlich oder alternativ eine Reinigungsdüse 62 vorgesehen sein, deren punktförmiger oder linienförmiger Reinigungsstrahl von außen auf den Filterkörper 2 gerichtet ist.

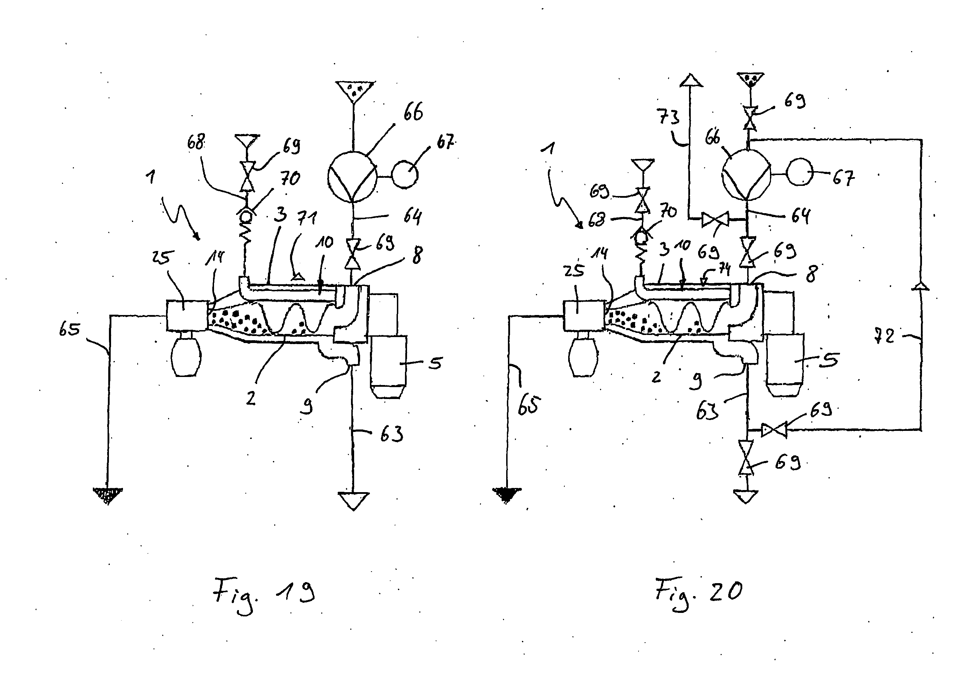

Die Fig. 19 bis 24 zeigen exemplarisch verschiedene Einbausituationen für die Reinigungsvorrichtung 1. Dementsprechend ist im montierten Zustand der Ablauf 9 mit einer Ablaufleitung 63 verbunden. Der Zulauf 8 ist mit einer Zulaufleitung 64 verbunden und die Austragöffnung 14 ist über das Austragventil 25 an eine Austragleitung 65 angeschlossen. Desweiteren ist eine Pumpe 66 vorgesehen, die von einem Motor 67 angetrieben ist. Bei den Ausführungsformen der Fig. 19 bis 21 ist an die Rückspüleinrichtung 10 außerdem eine Rückspülleitung 68 angeschlossen.

Bei der in Fig. 19 gezeigten Ausführungsform ist die Pumpe 66 in der Zulaufleitung 64 angeordnet, und zwar stromauf eines schaltbaren Sperrventils 69. Die Rückspülleitung 68 enthält ebenfalls ein schaltbares Sperrventil 69 sowie zusätzlich ein Rückschlagsperrventil 70. Im Filtrierbetrieb fördert die Pumpe 66 die verunreinigte Flüssigkeit durch die Reinigungsvorrichtung 1. Gleichzeitig kann über die Rückspüleinrichtung 10 ein Rückspülmedium, bei dem es sich um eine Flüssigkeit oder um ein Gas, insbesondere Luft, handeln kann, zum Abreinigen des Filterkörpers 2 zugeführt werden. Zum Entleeren der Reinigungsvorrichtung 1 können die Pumpe 66 ausgeschaltet und das stromab davon angeordnete Sperrventil 69 gesperrt werden. Über die Rückspülleitung 68 kann ein Gas, vorzugsweise Luft, insbesondere Druckluft zugeführt werden, wodurch sämtliche Flüssigkeit aus der Reinigungsvorrichtung 1 durch den Ablauf 9 austreibbar ist. Um bei einem späteren Filtrierbetrieb die Gasbefüllung aus der Reinigungsvorrichtung 1 wieder ablassen zu können, kann das Gehäuse 3 mit einem entsprechenden Entlüftungsventil 71 ausgestattet sein.

Die in Fig. 20 gezeigte Ausführungsform unterscheidet sich von der in Fig. 19 gezeigten Ausführungsform durch eine Absaugleitung 72 und eine Entleerungsleitung 73 sowie weitere schaltbare Sperrventile 69. Die Absaugleitung 72 ist an die Ablaufleitung 63 stromauf eines darin angeordneten Sperrventils 69 und an die Zulaufleitung 64 stromauf der Pumpe 66 angeschlossen. Die Entleerungsleitung 73 ist stromab der Pumpe 66 an die Zulaufleitung 64 stromauf eines darin angeordneten Sperrventils 69 angeschlossen. Sowohl die Absaugleitung 72 als auch die Entleerungsleitung 73 enthalten jeweils ein Sperrventil 69.

Beim Filtrierbetrieb sind die Sperrventile 69 der Absaugleitung 72 und der Entleerungsleitung 73 gesperrt, so dass die Pumpe 66 die zu filternde Flüssigkeit durch die Reinigungsvorrichtung 1 fördert. In einem Absaugbetrieb sind die in der Zulaufleitung 64 und in der Ablaufleitung 63 angeordneten Sperrventile 69 gesperrt, während die Sperrventile 69 der Absaugleitung 72 und der Entleerungsleitung 73 geöffnet sind. Die Pumpe 66 saugt dann Flüssigkeit aus der Reinigungsvorrichtung 1 an deren Ablauf 9 ab und fördert diese durch die Absaugleitung 72 und die Entleerungsleitung 73 weg von der Reinigungsvorrichtung 1. Gleichzeitig kann dabei über die Rückspülleitung 68 oder über ein Belüftungsventil 74 Luft oder ein anderes Gas nachgeführt werden.

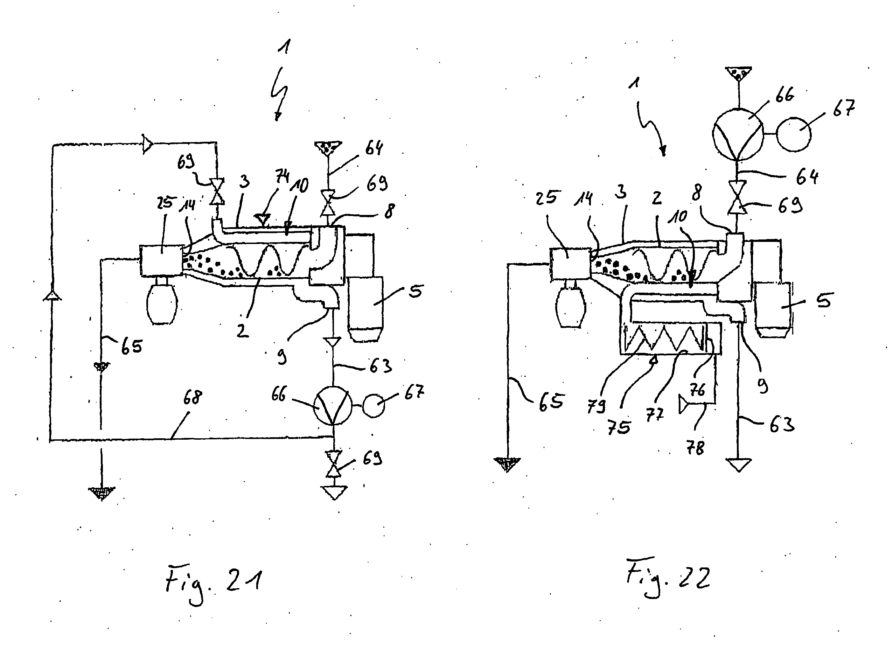

Bei der in Fig. 21 gezeigten Ausführungsform ist die Pumpe 66 in der Ablaufleitung 63 angeordnet. Desweiteren ist die Rückspülleitung 68 stromab der Pumpe 66 und stromauf eines in der Ablaufleitung 63 angeordneten Sperrventils 69 an die Ablaufleitung 63 angeschlossen. Im Filtrierbetrieb saugt die Pumpe 66 das zu filternde Medium durch die Reinigungseinrichtung 1. Gleichzeitig kann ein Teilstrom des gereinigten Mediums über die Rückspülleitung 68 zum Rückspülen des Filterkörpers 2 genutzt werden. Zum Entleeren der Reinigungseinrichtung 1 wird das in der Zulaufleitung 64 angeordnete Sperrventil 69 gesperrt, wodurch die Pumpe 66 die Reinigungseinrichtung 1 leer saugt. Über ein Belüftungsventil 74 kann entsprechend Luft oder Gas nachgeführt werden.

Bei den Ausführungsformen der Fig. 22 bis 24 ist die Pumpte 66 jeweils in der Zulaufleitung 64 angeordnet, und zwar stromauf eines ebenfalls in der Zulaufleitung 64 angeordneten Sperrventils 69. Bei diesen Ausführungsformen ist an die Rückspüleinrichtung 10 eingangsseitig ein Druckerzeuger 75 angeschlossen. Dieser Druckerzeuger 75 ist so ausgestaltet, dass damit eine rückspülende Druckströmung eines Spülmediums erzeugt werden kann, mit deren Hilfe die segmentweise Rückspülung des Filterkörpers 2 realisiert wird. Dieser Druckerzeuger 75 wird dabei periodisch betrieben, um so Segment 33 für Segment 33 mit der Druckströmung zu beaufschlagen. Unter einer Druckströmung wird hierbei eine Strömung verstanden, welche den Filterkörper 2 mit einem relativ hohen Druck beaufschlagt. Dabei kann bereits ein vergleichsweise kleines Volumen an Spülmedium ausreichen, um durch die Rückspülung eine effektive Reinigungswirkung zu erzielen. Bei kurzen Druckströmungen kann auch von Druckpulsen oder von einer impulsartigen Rückspülung gesprochen werden.

Vorzugsweise kann der Druckerzeuger 75 auch so ausgestaltet sein, das er als Unterdruckerzeuger betreibbar ist. Im Betrieb als Unterdruckerzeuger erzeugt der Druckerzeuger 75 über die Rückspüleinrichtung 10 eine spülende Saugströmung, die eine der rückspülende Druckströmung entgegengerichtete Strömungsrichtung aufweist. Über die Saugströmung ist es möglich, Verunreinigungen, die sich im Bereich der Rückspüleinrichtung 10 am Filterkörper 2 an der Reinseite 7 anlagern, abzusaugen. In den Fig. 8 bis 14 ist die Druckströmung durch in den Rohrraum 6 hinein und die Saugströmung durch aus den Rohraum 6 heraus orientierte Pfeile angedeutet.

Der Druckerzeuger 75 ist bei den hier gezeigten Ausführungsformen vorzugsweise als Kolben-Zylinder-Aggregat ausgestaltet und umfasst somit einen Kolben 76, der in einem Zylinder 77 hubverstellbar angeordnet ist. Bei der in Fig. 22 gezeigten Ausführungsform ist der Druckerzeuger 75 über eine Steuerleitung 78 pneumatisch oder hydraulisch zur Durchführung eines Vorhubs antreibbar, bei dem der Druckerzeuger 75 die rückspülende Druckströmung erzeugt. Zur Durchführung eines Rückhubs enthält der Zylinder 77 eine Rückstellfeder 79, die den Kolben 76 in der Gegenrichtung antreibt. Der Rückhub kann beispielsweise eine spülende Saugströmung erzeugen.

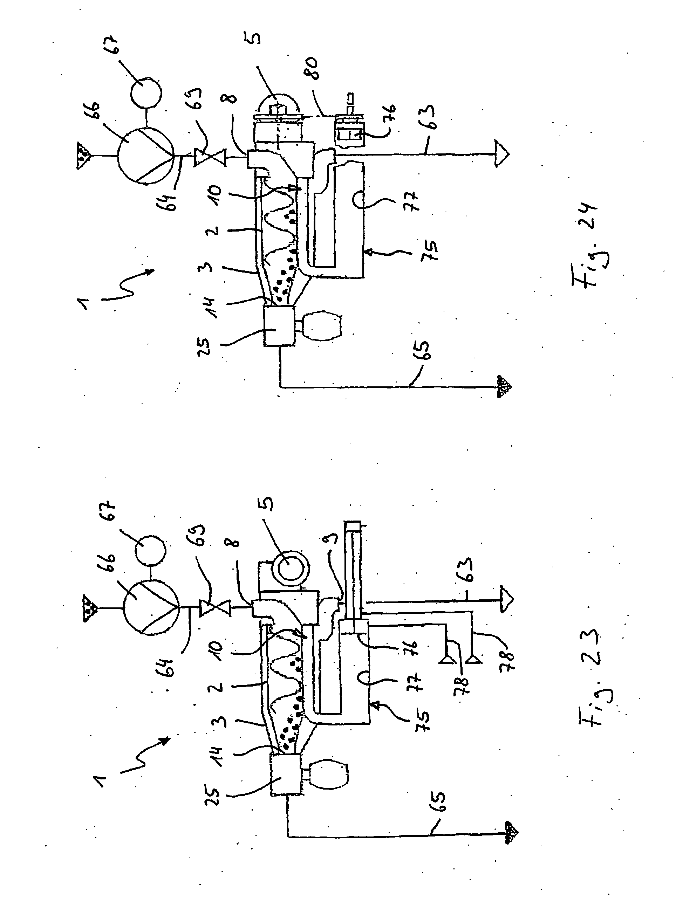

Bei der in Fig. 23 gezeigten Ausführungsform sind zwei Steuerleitungen 78 an den Druckerzeuger 75 angeschlossen. Über die eine Steuerleitung 78 wird der Kolben 76 hydraulisch oder pneumatisch zur Durchführung des Vorhubs angetrieben, während er über die andere Steuerleitung 78 zur Durchführung des Rückhubs pneumatisch oder hydraulisch angetrieben ist.

Bei der in Fig. 24 gezeigten Ausführungsform ist der Druckerzeuger 75 mit der Antriebseinrichtung 5 antriebsgekoppelt, die auch zum Antreiben des Filterkörpers 2 und/oder der Schneckenwelle 21 dient. Die Antriebskopplung erfolgt beispielsweise über einen Antriebsriemen 80 oder eine Kette oder eine Verzahnung. Der Antrieb des Kolbens 76 kann beispielsweise mit Hilfe eines hier nicht näher dargestellten Spindeltriebs erfolgen.

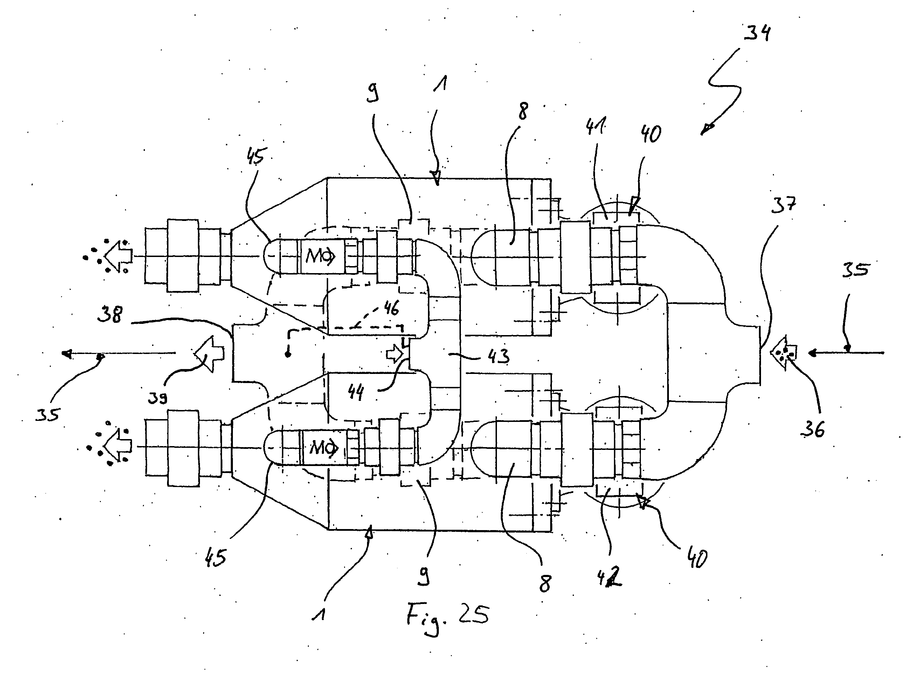

Entsprechend Fig. 25 umfasst eine erfindungsgemäße Reinigungsanlage 34 zumindest zwei Reinigungsvorrichtungen 1, die vorzugsweise erfindungsgemäß ausgestaltet sein können, jedoch grundsätzlich auch konventioneller Natur sein können. Die Reinigungsanlage 34 ist in einen Flüssigkeitskreis 35 integriert, der hier durch Pfeile angedeutet ist. Dieser Flüssigkeitskreis 35 ist vorzugsweise ein KühlSchmiermittel-Kreis 35. Die Reinigungsanlage 34 erhält über einen Rücklauf 36 des Flüssigkeitskreises 35 mit Feststoffen verschmutzte Flüssigkeit. Hierzu ist der Flüssigkeitskreis 35 an einem gemeinsamen Zulaufanschluss 37 der Reinigungsanlage 34 angeschlossen. Aus der Reinigungsanlage 34 tritt die von den Feststoffen gereinigte Flüssigkeit durch einen gemeinsamen Ablaufanschluss 38 aus, an den ein Vorlauf 39 des Flüssigkeitskreises 35 angeschlossen ist.

Der gemeinsame Zulaufanschluss 37 verzweigt sich auf die beiden Zuläufe 8 der beiden Reinigungsvorrichtungen 1. Ebenso verzweigt sich der gemeinsame Ablaufanschluss 38 auf die beiden Abläufe 9 der beiden Reinigungsvorrichtungen 1. Dementsprechend sind die beiden Reinigungsvorrichtungen 1 innerhalb der Reinigungsanlage 34 parallel an den Flüssigkeitskreis 35 angeschlossen.

Die Reinigungsanlage 34 weist eine Zulaufventilanordnung 40 auf, die im vorliegenden Fall durch zwei separat ansteuerbare Zulaufventile 41 und 42 gebildet ist, wobei das eine Zulaufventil 41 den Zulauf 8 der einen Reinigungsvorrichtung 1 steuert, während das andere Zulaufventil 42 den Zulauf 8 der anderen Reinigungsvorrichtung 1 steuert. Auf diese Weise kann die Zulaufventilanordnung 40 die eine und/oder die andere Reinigungsvorrichtung 1 vom Flüssigkeitskreis 35 trennen.

Zweckmäßig wird die Reinigungsanlage 34 so betrieben, dass permanent filtriert werden kann. Dementsprechend kann bei beiden Reinigungsvorrichtungen 1 der Filtrierbetrieb wechselweise aktiviert und deaktiviert werden. Bei deaktiviertem Filtrierbetrieb ist das jeweilige Zulaufventil 41, 42 gesperrt, so dass der Druck im Rohraum 6 abfällt. Dementsprechend kann die Austragöffnung 14 bzw. das jeweilige Austragventil 25 geöffnet werden. Der Schneckenförderer 13 ist dabei noch in Betrieb und kann die abgereinigten Feststoffe im wesentlichen trocken aus dem Gehäuse 3 der jeweiligen Reinigungsvorrichtung 1 herausfördern. Zweckmäßig ist bei der Reinigungsvorrichtung 1, deren Filtrierbetrieb deaktiviert ist, die Rückspüleinrichtung 10 nach wie vor in Betrieb, was die vollständige Abreinigung des Filterkörpers 2 ermöglicht.

Bei der hier gezeigten, bevorzugten Ausführungsform besitzt die Reinigungsanlage 34 eine gemeinsame Versorgungsleitung 43, die einen gemeinsamen Versorgungsanschluss 44 aufweist und die bei jeder Reinigungsvorrichtung 1 zu einem Anschluss 45 führt, über den die Rückspüleinrichtung 10 der jeweiligen Reinigungsvorrichtung 1 mit dem jeweiligen Rückspülmedium versorgt werden kann. Dementsprechend ist der gemeinsame Versorgungsanschluss 44 an eine gemeinsame Rückspülmittelversorgung angeschlossen. Die Rückspüleinrichtungen 10 der beiden Reinigungsvorrichtungen 1 können somit permanent aktiv sein, auch wenn der Filtrierbetrieb bei beiden Reinigungsvorrichtungen 1 wechselweise aktiviert und deaktiviert wird. Hierdurch wird die Steuerung zum Betreiben der Reinigungsanlage 34 erheblich vereinfacht.

Gemäß einer bevorzugten Ausführungsform kann - wie bereits weiter oben erwähnt - das Rückspülmedium zweckmäßig durch die gereinigte Flüssigkeit des Flüssigkeitskreises 35 gebildet sein. Dementsprechend ist die Versorgungsleitung 43 über ihren Versorgungsanschluss 44 an die Reinseite der Reinigungsablage 34 angeschlossen. Vorzugsweise erfolgt dieser Anschluss intern, also noch innerhalb der Reinigungsanlage 34, was Leitungswege spart. Dieser Anschluss ist in Fig. 25 durch eine unterbrochene Linie angedeutet und mit 46 bezeichnet.

## Patentansprüche

1. Reinigungsvorrichtung zum Entfernen von Feststoffen aus einer Flüssigkeit, insbesondere für einen Kühl-Schmierstoff-Kreis (35),
A: mit einem liegend angeordneten hohlzylindrischen Filterkörper (2), der einen Rohraum (6) von einem Reinraum (7) trennt,
B: mit einem rohseitigen Zulauf (8), der mit dem Rohraum (6) verbunden ist,
C: mit einem reinseitigen Ablauf (9), der mit dem Reinraum (7) verbunden ist,
D: mit einer Rückspüleinrichtung (10) zum segmentweisen Rückspülen des Filterkörpers (2),
E: mit einer Austrageinrichtung (12) zum Entfernen abgereinigter Feststoffe aus dem Rohraum (6),
F: wobei der Filterkörper (2) den Rohraum (6) umhüllt,
G: wobei der Reinraum (7) den Filterkörper (2) umhüllt,
H: wobei die Austrageinrichtung (12) einen Schneckenförderer (13) aufweist, der die abgereinigten Feststoffe einer Austragöffnung (14) zuführt,
**dadurch gekennzeichnet,**
I**: dass** der Rohraum (6) für den Filtrierbetrieb mit Druck beaufschlagbar ist,
J: **dass** ein Austragventil (25) zum Steuern der Austragöffnung (14) vorgehen ist.

2. Reinigungsvorrichtung nach Anspruch 1,
**dadurch gekennzeichnet,**
- **dass** eine Antriebseinrichtung (5) vorgesehen ist, die mit dem Filterkörper (2) antriebsgekoppelt ist und diesen im Betrieb der Reinigungsvorrichtung (1) um dessen Längsmittelachse (4) rotierend antreibt,
- **dass** der Schneckenförderer (13) wenigstens einen wendelförmigen Steg (29; 29a, 29b) aufweist, der an einer Innenseite des Filterkörpers (2) angebracht ist und radial nach innen absteht.

3. Reinigungsvorrichtung nach Anspruch 2,
**dadurch gekennzeichnet,**
**dass** sich der wenigstens eine Steg (29) im Wesentlichen über die gesamte axiale Länge eines radial durchströmbaren Filterabschnitts (16) des Filterkörpers (2) erstreckt.

4. Reinigungsvorrichtung nach Anspruch 2,
**dadurch gekennzeichnet,**
**dass** eine solcher Steg (29a) ausschließlich in einem der Austragöffnung (14) zugewandten axialen Endabschnitt (17) des Filterkörpers (2) angeordnet ist, der axial an einen radial durchströmbaren Filterabschnitt (16) des Filterkörpers (2) anschließt.

5. Reinigungsvorrichtung nach Anspruch 4,
**dadurch gekennzeichnet,**
**dass** ein weiterer solcher Steg (29b) ausschließlich in einem von der Austragöffnung (14) abgewandten axialen Endabschnitt (15) des Filterkörpers (2) angeordnet ist, der axial an den Filterabschnitt (16) anschließt.

6. Reinigungsvorrichtung nach einem der Ansprüche 1 bis 5,
**dadurch gekennzeichnet,**
**dass** im Rohraum (6) eine Rinne (18) angeordnet ist, die sich im Wesentlichen über die gesamte axiale Länge eines radial durchströmbaren Filterabschnitts (16) des Filterkörpers (2) erstreckt.

7. Reinigungsvorrichtung nach Anspruch 6,
**dadurch gekennzeichnet,**
- **dass** die Rückspüleinrichtung (10) eine im Reinraum (7) angeordnete Rückspüldüse (11) aufweist, die sich im wesentlichen über die gesamte axiale Länge des Filterabschnitts (16) erstreckt und die zum Rückspülen ein Umfangssegment (33) des Filterabschnitts (16) mit einer Rückspülströmung beaufschlagt,
- **dass** die Rinne (18) der Rückspüldüse (11) radial gegenüberliegend angeordnet ist.

8. Reinigungsvorrichtung nach Anspruch 6 oder 7,
**dadurch gekennzeichnet,**
**dass** sich die Rinne (18) von einem von der Austragöffnung (14) abgewandten Endabschnitt (15) des Filterkörpers (2), der axial an den Filterabschnitt (16) anschließt, zumindest bis zu einem der Austragöffnung (14) zugewandten Endabschnitt (17) erstreckt, der axial an den Filterabschnitt (16) anschließt.

9. Reinigungsvorrichtung nach Anspruch 8,
**dadurch gekennzeichnet,**
**dass** die Rinne (18) im Bereich des der Austragöffnung (14) zugewandten Endabschnitts (17) ein axial offenes Ende (28) aufweist

10. Reinigungsvorrichtung nach einem der Ansprüche 6 bis 8,
**dadurch gekennzeichnet,**
**dass** der Schneckenförderer (13) eine drehend antreibbare Schneckenwelle (21) aufweist, die sich entlang eines Grundes (20) der Rinne (18) erstreckt.

11. Reinigungsvorrichtung nach Anspruch 10,
**dadurch gekennzeichnet,**
- **dass** die Rinne (18) im Bereich eines der Austragöffnung (14) zugewandten axialen Endabschnitts (15) des Filterkörpers (2), der axial an einen radial durchströmbaren Filterabschnitt (16) des Filterkörpers (2) anschließt, in ein zur Austragöffnung (14) führendes Rohr (22) übergeht,
- **dass** sich die Schneckenwelle (21) durch das Rohr (22) bis an die Austragöffnung (14) erstreckt.

12. Reinigungsvorrichtung nach Anspruch 1,
**dadurch gekennzeichnet,**
**dass** der Schneckenförderer (13) eine drehend antreibbare Schneckenwelle (21) aufweist, deren Schnecke (47) mit einer Innenwand (48) des Filterkörpers (2) zusammenwirkt.

13. Reinigungsvorrichtung nach Anspruch 12,
**dadurch gekennzeichnet,**
- **dass** der Filterkörper (2) an seinem der Austragöffnung (14) zugewandten axialen Endabschnitts (17) axial in einen Übergangsabschnitt (52) übergeht, in dem sich der Rohraum (6) mit zunehmender Entfernung von der Austragöffnung (14) konisch aufweitet,
- **dass** sich die Schneckenwelle (21) bis in den Übergangsabschnitt (52) hinein erstreckt,
- **dass** die Schnecke (47) einen zum Übergangsabschnitt (52) komplementären konischen Schneckenabschnitt (54) aufweist.

14. Reinigungsvorrichtung nach Anspruch 13,
**dadurch gekennzeichnet,**
- **dass** der Übergangsabschnitt (52) an seinem vom Filterkörper (2) abgewandten Ende axial in einen an die Austragöffnung (14) angeschlossenen zylindrischen Rohrabschnitt (53) übergeht,
- **dass** sich die Schneckenwelle (21) bis in den Rohrabschnitt (53) hineinerstreckt,
- **dass** die Schnecke (47) einen zum Rohrabschnitt (53) komplementären zylindrischen Schneckenabschnitt (55) aufweist.

15. Reinigungsvorrichtung nach einem der Ansprüche 12 bis 14,
**dadurch gekennzeichnet,**
- **dass** an der Schnecke (47) eine Bürstenanordnung (60) zum Abbürsten der Innenwand (48) des Filterkörpers (2) angeordnet ist, und/oder
- **dass** an der Schnecke (47) eine Schaberanordnung (57) zum Abschaben der Innenwand (48) des Filterkörpers (2) angeordnet ist.

16. Reinigungsvorrichtung nach einem der Ansprüche 10 bis 15,
**dadurch gekennzeichnet,**
**dass** die Schneckenwelle (21) und der Filterkörper (2) mit einer gemeinsamen Antriebseinrichtung (5) antriebsgekoppelt sind.

17. Reinigungsvorrichtung nach Anspruch 16,
**dadurch gekennzeichnet,**
**dass** eine Kupplungseinrichtung (49) vorgesehen ist, mit welcher eine Antriebskopplung zwischen der Antriebseinrichtung (5) einerseits und dem Filter (2) und/oder der Schneckenwelle (21) andererseits aktivierbar und deaktivierbar ist.

18. Reinigungsvorrichtung nach einem der Ansprüche 10 bis 17,
**dadurch gekennzeichnet,**
**dass** eine Schnecke (47) der Schneckenwelle (21) durch flexible Borsten (56) gebildet ist.

19. Reinigungsvorrichtung nach einem der Ansprüche 1 bis 18,
**dadurch gekennzeichnet,**
**dass** die Austragöffnung (14) mit einem Austragventil (25) verschließbar ist.

20. Reinigungsvorrichtung nach einem der Ansprüche 1 bis 19,
**dadurch gekennzeichnet,**
**dass** im Rohraum (6) eine Spüldüse (27) angeordnet ist, die zum Abspülen ein Umfangssegment des Filterkörpers (2) mit einer Spülströmung beaufschlagt.

21. Reinigungsvorrichtung nach einem der Ansprüche 1 bis 20,
**dadurch gekennzeichnet,**
- **dass** der Ablauf (9) mit einer Ablaufleitung (63) verbunden ist,
- **dass** der Zulauf (8) mit einer Zulaufleitung (64) verbunden ist,
- **dass** in der Zulaufleitung (64) eine Pumpe (66) angeordnet ist,
- **dass** eine Absaugleitung (72) vorgesehen ist, die an die Ablaufleitung (63) stromauf der Pumpe (66) an die Zulaufleitung (64) angeschlossen ist,
- **dass** eine Entleerungsleitung (73) vorgesehen ist, die stromab der Pumpe (66) an die Zulaufleitung (64) angeschlossen ist,
- **dass** schaltbare Sperrventile (69) in der Ablaufleitung (63), in der Zulaufleitung (64), in der Entleerungsleitung (73) und in der Absaugleitung (72) so angeordnet sind, dass die Pumpe (66) in einem Absaugebetrieb Flüssigkeit am Ablauf (9) absaugen und über die Absaugleitung (72) und die Entleerungsleitung (73) abführen kann.

22. Reinigungsvorrichtung nach einem der Ansprüche 1 bis 20,
**dadurch gekennzeichnet,**
- **dass** in einer an dem Zulauf (8) angeschlossenen Zulaufleitung (64) ein schaltbares Sperrventil (6) angeordnet ist,
- **dass** bei gesperrter Zulaufleitung (64) durch Einblasen von Gas durch die Rückspüleinrichtung (10) Flüssigkeit aus dem Ablauf (9) austreibbar ist.

23. Reinigungsvorrichtung nach einem der Ansprüche 1 bis 22,
**dadurch gekennzeichnet,**
**dass** die Rückspüleinrichtung (10) eingangsseitig an einen Druckerzeuger (75) zur Erzeugung von rückspülenden Druckströmungen eines Spülmediums angeschlossen ist.

24. Reinigungsvorrichtung nach Anspruch 23,
**dadurch gekennzeichnet,**
- **dass** der Druckerzeuger (75) als Kolben-Zylinder-Aggregat ausgestaltet ist, und/oder
- **dass** das Kolben-Zylinder-Aggregat zur Durchführung eines Vorhubs pneumatisch oder hydraulisch angetrieben ist und zur Durchführung eines Rückhubs durch eine Rückstellfeder (79) angetrieben ist, und/oder
- **dass** das Kolben-Zylinder-Aggregat zur Durchführung von Vorhub und Rückhub pneumatisch oder hydraulisch angetrieben ist, und/oder
- **dass** das Kolben-Zylinder-Aggregat und der Filterkörper (2) mit einer gemeinsamen Antriebseinrichtung (5) antriebsgekoppelt sind, und/oder
- **dass** das Kolben-Zylinder-Aggregat mittels eines Spindeltriebs angetrieben ist, und/oder
- **dass** der Druckerzeuger (75) als Unterdruckerzeuger zur Erzeugung von spülenden Saugströmungen betreibbar ist.

25. Reinigungsanlage zum Entfernen von Feststoffen aus einer Flüssigkeit, insbesondere für einen Kühl-Schmiermittel-Kreis (35),
- mit wenigstens zwei Reinigungsvorrichtungen (1) nach wenigstens einem der Ansprüche 1 bis 24,
- wobei die Reinigungsvorrichtungen (1) parallel an einen die Flüssigkeit fördernden Kreis (35) angeschlossen sind,
- wobei eine Zulaufventilanordnung (40) vorgesehen ist, die es ermöglicht, den Zulauf (8) von wenigstens einer der Reinigungsvorrichtungen (1) vom Kreis (35) zu trennen.

26. Reinigungsanlage nach Anspruch 25,
**dadurch gekennzeichnet,**
- **dass** jede Reinigungsvorrichtung (1) einen Anschluss, (45) aufweist, über den der Rückspüleinrichtung (10) der jeweiligen Reinigungsvorrichtung (1) ein Rückspülmedium zuführbar ist,
- **dass** die Anschlüsse (45) der Reinigungsvorrichtungen (1) an eine gemeinsame Versorgungsleitung (43) zum Zuführen des Rückspülmediums angeschlossen sind.

27. Reinigungsanlage nach Anspruch 26,
**dadurch gekennzeichnet,**
**dass** die Versorgungsleitung (43) an die Abläufe (9) der Reinigungsvorrichtungen (1) angeschlossen ist oder mit diesen kommuniziert.

## Claims

1. A cleaning apparatus for removing solids from a liquid, in particular for a cooling lubricant circuit (35),
A: with a horizontal arranged hollow cylindrical filter body (2) which separates a crude space (6) from a clean space (7),
B: with an inlet (8) on the crude end, connected to the crude space (6),
C: with an outlet (9) on the clean end, connected to the clean space (7),
D: with a backwashing device (10) for backwashing the filter body (2) segment by segment,
E: with a discharge mechanism (12) for removing cleaned solids from the crude space (6),
F: the filter body (2) surrounds the crude space (6),
G: the clean space (7) surrounds the filter body (2),
H: the discharge mechanism (12) has a screw conveyor (13) which supplies the solids removed by cleaning to a discharge opening (14),
**characterized in that**
I: the crude space (6) can be acted upon by pressure for the filtration operation,
J: a discharge valve (25) for controlling the discharge opening (14) is provided.

2. The cleaning apparatus according to Claim 1,
**characterized in that**
- a drive unit (5), which is drive-coupled to the filter body (2) and drives it to rotate about its central longitudinal axis (4) in operation of the cleaning apparatus (1), is provided,
- the screw conveyor (13) has at least one coiled web (29; 29a, 29b), which is attached to an inside of the filter body (2) and protrudes radially inward.

3. The cleaning apparatus according to Claim 2,
**characterized in that**
the at least one web (29) extends essentially over the entire length of a filter section (16) of the filter body (2) through which the flow can pass radially.

4. The cleaning apparatus according to Claim 2,
**characterized in that**
such a web (29a) is arranged exclusively in an axial end section (17) of the filter body (2) facing the discharge opening (14) and connected axially to a filter section (16) of the filter body (2) through which the flow can pass radially.

5. The cleaning apparatus according to Claim 4,
**characterized in that** another such web (29b) is arranged exclusively in an axial end section (15) of the filter body (2), which faces away from the discharge opening (14) and is connected axially to the filter section (16).

6. The cleaning apparatus according to any one of Claims 1 through 5,
**characterized in that**
a channel (18) which extends essentially over the entire axial length of a filter section (16) of the filter body (2) through which the flow can pass radially is arranged in the crude space (6).

7. The cleaning apparatus according to Claim 6,
**characterized in that**
- the backwashing device (10) has a backwashing nozzle (11) arranged in the clean space (7), extending essentially over the entire axial length of the filter (16) and acting upon a circumferential segment (33) of the filter section (16) with a backwashing flow for backwashing,
- the channel (18) is arranged radially opposite the backwashing nozzle (11).

8. The cleaning apparatus according to Claim 6 or 7,
**characterized in that**
the channel (18) extends from an end section (15) of the filter body (2) which faces away from the discharge opening (14) and is connected axially to the filter section (16), at least up to an end section (17) facing the discharge opening (14) and connected axially to the filter section (16).

9. The cleaning apparatus according to Claim 8,
**characterized in that**
the channel (18) has an axially open end (28) in the area of the end section (17) facing the discharge opening (14).

10. The cleaning apparatus according to any one of Claims 6 through 8,
**characterized in that**
the screw conveyer (13) has a screw shaft (21) which can be driven to rotate and extends along a base (20) of the channel (18).

11. The cleaning apparatus according to Claim 10,
**characterized in that**
- the channel (18) develops into a pipe (22) leading to the discharge opening (14) in the area of an axial end section (15) of the filter body (2), which faces the discharge opening (14) and is connected axially to a filter section (16) of the filter body (2) through which the flow can pass radially,
- the screw shaft (21) extends through the pipe (22) up to the discharge opening (14).

12. The cleaning apparatus according to Claim 1,
**characterized in that**
the screw conveyor (13) has a screw shaft (21) that is driven to rotate, its screw (47) cooperating with an inside wall (48) of the filter body (2).

13. The cleaning apparatus according to Claim 12,
**characterized in that**
- at its axial end section (17) facing the discharge opening (14), the filter body (2) develops axially into a transitional section (52), in which the crude space (6) widens conically with an increase in the distance from the discharge opening (14),
- the screw shaft (21) extends into the transitional section (52),
- the screw (47) has a conical screw section (54) that is complementary to the transitional section (52).

14. The cleaning apparatus according to Claim 13,
**characterized in that**
- the transitional section (52) develops axially into a cylindrical end section (53) that is connected to the discharge opening (14) on its end facing away from the filter body (2),
- the screw shaft (21) extends into the pipe section (53),
- the screw (47) has a cylindrical screw section (55) that is complementary to the pipe section (53) .

15. The cleaning apparatus according to any one of Claims 12 through 14,
**characterized in that**
- a brush arrangement (60) for brushing off the inside wall (48) of the filter body (2) is arranged on the screw (47), and/or
- a scraper arrangement (57) for scraping off the inside wall (48) of the filter body (2) is arranged on the screw (47).

16. The cleaning apparatus according to any one of Claims 10 through 15,
**characterized in that**
the screw shaft (21) and the filter body (2) are drive-coupled to a common drive unit (5).

17. The cleaning apparatus according to Claim 16,
**characterized in that**
a coupling device (49) is provided, with which a drive coupling between the drive unit (5) on the one hand and the filter (2) and/or the screw shaft (21) on the other hand can be activated and deactivated.

18. The cleaning apparatus according to any one of Claims 10 through 17,
**characterized in that**
a screw (47) of the screw shaft (21) is formed by flexible bristles (56).

19. The cleaning apparatus according to any one of Claims 1 through 18,
**characterized in that**
the discharge opening (14) can be closed with a discharge valve (25).

20. The cleaning apparatus according to any one of Claims 1 through 19,
**characterized in that**
a rinsing nozzle (27) which can be acted upon by a rinsing flow is provided in the crude space (6) for rinsing off a circumferential segment of the filter body (2).

21. The cleaning apparatus according to any one of Claims 1 through 20,
**characterized in that**
- the outlet (9) is connected to an outlet line (63),
- the inlet (8) is connected to an inlet line (64),
- a pump (66) is arranged in the inlet line (64),
- a suction line (72) which is connected to the outlet line (63) and to the inlet line (64) upstream from the pump (66) is provided,
- an exhaust line (73), which is connected to the inlet line (64) downstream from the pump (66), is provided,
- the switchable cutoff valves (69) are arranged in the outlet line (63), in the inlet line (64), in the exhaust line (73) and in the suction line (72), such that the pump (66) can draw liquid off at the outlet (9) in suction operation and can remove the liquid via the suction line (72) and the exhaust line (73).

22. The cleaning apparatus according to any one of Claims 1 through 20,
**characterized in that**
- a switchable cutoff valve (6) is arranged in an inlet line (64) connected to the inlet (8),
- with the inlet line (64) closed, liquid can be expelled from the outlet (9) by injecting gas through the backwashing device (10).

23. The cleaning apparatus according to any one of Claims 1 through 22,
**characterized in that**
the backwashing device (10) is connected at the inlet end to a pressure generator (75) for generating backwashing pressure flows of a rinsing medium.

24. The cleaning apparatus according to Claim 23,
**characterized in that**
- the pressure generator (75) is designed as a piston-cylinder unit, and/or
- the piston-cylinder unit is driven pneumatically or hydraulically to execute a forward stroke and is driven by a restoring spring (79) to execute a return stroke, and/or
- the piston-cylinder unit is driven pneumatically or hydraulically to execute a forward stroke and a reverse stroke, and/or
- the piston-cylinder unit and the filter body (2) are drive-coupled to a common drive unit (5), and/or
- the piston-cylinder unit is driven by means of a spindle drive, and/or
- the pressure generator (75) can be operated as a vacuum generator to generate rinsing suction flows.

25. The cleaning system for removing solids from a liquid, in particular for cooling lubricant circuit (35),
- having at least two cleaning apparatuses (1) with features A through E of Claim 1 and in particular according to at least one of Claims 1 through 24,
- wherein the cleaning apparatuses (1) are connected in parallel to a circuit (35) that conveys the liquid,
- wherein an inlet valve arrangement (40) which makes it possible to separate the inlet (8) from at least one of the cleaning apparatuses (1) of the circuit (35) is provided.

26. The cleaning system according to Claim 25,
**characterized in that**
- each cleaning apparatus (1) has a connection (45) by means of which a backwashing medium can be supplied to the backwashing device (10) of the respective cleaning apparatus (1),
- the connections (45) of the cleaning apparatuses (1) are connected to a common supply line (43) for supplying the backwashing medium.

27. The cleaning system according to Claim 26,
**characterized in that**
the supply line (43) is connected to the outlets (9) of the cleaning apparatuses (1) or communicates with them.

## Revendications

1. Dispositif de purification pour éliminer des matières solides d'un liquide, notamment destiné à un circuit de lubrifiant - refroidissement (35),
A : comportant un corps de filtre (2) cylindrique creux disposé à plat, qui sépare une chambre de matière brute (6) d'une chambre de matière purifiée (7),
B : comportant une admission (8) du côté de matière brute, qui est relié à la chambre de matière brute (6),
C : comportant un échappement (9) du côté de matière purifiée, qui est relié à la chambre de matière purifiée (7),
D : comportant un dispositif de rétro-lavage (10) à des fins de rétro-lavage segmenté du corps de filtre (2),
E : comportant un dispositif de déversement (12) pour éliminer les matières solides purifiées hors de la chambre de matière brute (6),
F : dans lequel le corps de filtre (2) enveloppe la chambre de matière brute (6),
G : dans lequel la chambre de matière purifiée (7) enveloppe le corps de filtre (2),
H : dans lequel le dispositif de déversement (12) présente un convoyeur à vis (13), qui introduit les matières solides purifiées d'une ouverture de déversement (14),
**caractérisé en ce que**
I : la chambre de matière brute (6) pour le fonctionnement de filtrage peut être sollicitée par une pression,
J : une soupape de déversement (25) est prévue pour commander l'ouverture de déversement (14).

2. Dispositif de purification selon la revendication 1,
**caractérisé en ce que**
- un dispositif d'entraînement (5) est prévu, lequel est couplé en entraînement avec le corps de filtre (2) et entraîne celui-ci en rotation lors du fonctionnement du dispositif de purification (1) autour de l'axe longitudinal médian (4) de celui-ci,
- le convoyeur à vis (13) présente au moins un gradin (29 ; 29a, 29b) en spirale, qui est monté sur un côté intérieur du corps de filtre (2) et fait saillie vers la bas radialement vers l'intérieur.

3. Dispositif de purification selon la revendication 2,
**caractérisé en ce que**
au moins un gradin (29) s'étend essentiellement sur la totalité de la longueur axiale d'une portion de filtre (16) pouvant être traversée radialement du corps de filtre (2).

4. Dispositif de purification selon la revendication 2,
**caractérisé en ce que**
un tel gradin (29a) est disposé exclusivement dans une portion d'extrémité axiale (17) tournée vers l'ouverture de déversement (14) du corps de filtre (2), qui se raccorde axialement à une portion de filtre (16) du corps de filtre (2) pouvant être traversée radialement.

5. Dispositif de purification selon la revendication 4,
**caractérisé en ce que**
un autre tel gradin (29b) est disposé exclusivement dans une portion d'extrémité axiale (15) du corps de filtre (2) qui se détourne de l'ouverture de déversement (14), qui se raccorde axialement à la portion de filtre (16).

6. Dispositif de purification selon une des revendications 1 à 5,
**caractérisé en ce que**
dans la chambre de matière brute (6), une rigole (18) est disposée, laquelle s'étend essentiellement sur la totalité de la longueur axiale d'une portion de filtre (16) du corps de filtre (2) pouvant être traversée radialement.

7. Dispositif de purification selon la revendication 6,
**caractérisé en ce que**
- le dispositif de rétro-lavage (10) présente une buse de rétro-lavage (11) disposée dans la chambre de matière purifiée (7), qui s'étend essentiellement sur la totalité de la longueur axiale totale de la portion de filtre (16) et sollicite avec un courant de rétro-lavage un segment circonférentiel (33) de la portion de filtre (16) à des fins de rétro-lavage,
- la rigole (18) de la buse de rétro-lavage (11) est disposée radialement en vis-à-vis.

8. Dispositif de purification selon la revendication 6 ou 7,
**caractérisé en ce que**
la rigole (18) s'étend de la portion d'extrémité (15) du corps de filtre (2) qui se détourne de l'ouverture de déversement (14), qui se raccorde axialement à la portion de filtre (16), au moins jusqu'à une portion d'extrémité (17) tournée vers l'ouverture de déversement (14), qui se raccorde axialement à la portion de filtre (16).

9. Dispositif de purification selon la revendication 8,
**caractérisé en ce que**
la rigole (18) présente une ouverture (28) ouverte axialement au niveau de la portion d'extrémité (17) tournée vers l'ouverture de déversement (14).

10. Dispositif de purification selon une des revendications 6 à 8,
**caractérisé en ce que**
le convoyeur à vis (13) présente un arbre de vis sans fin (21) pouvant être entraîné en rotation, qui s'étend le long d'un fond (20) de la rigole (18).

11. Dispositif de purification selon la revendication 10,
**caractérisé en ce que**
- la rigole (18) aboutit au niveau d'une portion d'extrémité (15) axiale du corps de filtre (2) tournée vers l'ouverture de déversement (14), qui se raccorde axialement à une portion de filtre (16) du corps de filtre (2) pouvant être traversée radialement, à un tuyau (22) menant à l'ouverture de déversement (14),
- l'arbre de vis sans fin (21) s'étend à travers le tuyau (22) jusqu'à l'ouverture de déversement (14).

12. Dispositif de purification selon la revendication 1,
**caractérisé en ce que**
le convoyeur à vis (13) présente un arbre de vis sans fin (21) pouvant être entraîné en rotation, dont la vis sans fin (47) coopère avec une paroi intérieure (48) du corps de filtre (2).

13. Dispositif de purification selon la revendication 12,
**caractérisé en ce que**
- le corps de filtre aboutit au niveau de sa portion d'extrémité (17) axiale tournée vers l'ouverture de déversement (14) à une portion de transition (52), dans laquelle la chambre de matière brute (6) s'élargit coniquement à mesure qu'elle s'éloigne de l'ouverture de déversement (14),
- l'arbre de vis sans fin (21) s'étend à l'intérieur jusqu'à la portion de transition (52),
- la vis sans fin (47) présente une portion de vis sans fin (54) conique complémentaire à la portion de transition (52).

14. Dispositif de purification selon la revendication 13,
**caractérisé en ce que**
- la portion de transition (52) aboutit au niveau de son extrémité qui se détourne du corps de filtre (2) axialement à une portion tubulaire cylindrique (53) raccordée à l'ouverture de déversement (14),
- l'arbre de vis sans fin (21) s'étend à l'intérieur jusqu'à la portion tubulaire (53),
- la vis sans fin (47) présente une portion de vis sans fin (55) cylindrique complémentaire à la portion tubulaire (53).

15. Dispositif de purification selon une des revendications 12 à 14,
**caractérisé en ce que**
- sur la vis sans fin (47), un agencement de brosses (60) pour brosser la paroi intérieure (48) du corps de filtre (2) est disposé, et/ou
- sur la vis sans fin (47), un agencement de racles (57) pour racler la paroi intérieure (48) du corps de filtre (2) est disposé.

16. Dispositif de purification selon une des revendications 10 à 15,
**caractérisé en ce que**
l'arbre de vis sans fin (21) et le corps de filtre (2) sont couplés en entraînement à un dispositif d'entraînement commun (5).

17. Dispositif de purification selon la revendication 16,
**caractérisé en ce que**
un dispositif de couplage (49) est prévu, avec lequel un couplage en entraînement entre le dispositif d'entraînement (5) d'un côté et le filtre (2) et/ou l'arbre de vis sans fin (21) de l'autre côté peut être activé et désactivé.

18. Dispositif de purification selon une des revendications 10 à 17,
**caractérisé en ce que**
une vis sans fin (47) de l'arbre de vis sans fin (21) est formé par des soies (56) flexibles.

19. Dispositif de purification selon une des revendications 1 à 18,
**caractérisé en ce que** l'ouverture de déversement (14) peut être obturée par une soupape de déversement (25).

20. Dispositif de purification selon une des revendications 1 à 19,
**caractérisé en ce que**
dans la chambre de matière brute (6), une buse de lavage (27) est disposée, laquelle sollicite à des fins de lavage un segment circonférentiel du corps de filtre (2) avec un courant de lavage.

21. Dispositif de purification selon une des revendications 1 à 20,
**caractérisé en ce que**
- l'échappement (9) est relié à une conduite d'évacuation (63),
- l'admission (8) est reliée à une conduite d'amenée (64),
- une pompe (66) est disposée dans la conduite d'amenée (64),
- une conduite d'aspiration (72) est prévue, laquelle est raccordée à la conduite d'évacuation (63) en amont de la pompe (66) à la conduite d'amenée (64),
- une conduite de vidange (73) est prévue, laquelle est raccordée en aval de la pompe (66) à la conduite d'amenée (64),
- les soupapes d'arrêt commutables (69) dans la conduite d'évacuation (63), dans la conduite d'amenée (64), dans la conduite de vidange (73) et dans la conduite d'aspiration (72) sont disposées de telle sorte que la pompe (66) puisse aspirer du liquide au niveau de l'échappement (9) dans un fonctionnement d'aspiration et puisse l'évacuer via la conduite d'aspiration (72) et la conduite de vidange (73).

22. Dispositif de purification selon une des revendications 1 à 20,
**caractérisé en ce que**
- dans une conduite d'amenée (64) raccordée à l'admission (8), une soupape d'arrêt commutable (6) est disposée,
- quand la conduite d'amenée (64) est bloquée, du liquide peut être extrait de l'échappement (9) par soufflage de gaz à travers le dispositif de rétro-lavage (10).

23. Dispositif de purification selon une des revendications 1 à 22,
**caractérisé en ce que**
le dispositif de rétro-lavage (10) est raccordé du côté d'entrée à un générateur de pression (75) afin de générer des courants pressurisés rétro-lavants d'un milieu de lavage.

24. Dispositif de purification selon la revendication 23,
**caractérisé en ce que**
- le générateur de pression (75) est configuré comme un ensemble cylindre/piston, et/ou
- l'ensemble cylindre/piston est entraîné pneumatiquement ou hydrauliquement afin d'effectuer une course aller et est entraîné par un ressort de rappel (79) afin d'effectuer une course retour, et/ou
- l'ensemble cylindre/piston est entraîné pneumatiquement ou hydrauliquement afin d'effectuer la course aller et la course retour, et/ou
- l'ensemble cylindre/piston et le corps de filtre (2) sont couplés en entraînement à un dispositif d'entraînement commun (5), et/ou
- l'ensemble cylindre/piston est entraîné au moyen d'une commande à vérin à vis, et/ou
- le générateur de pression (75) peut être exploité comme un générateur de dépression afin de générer des courants d'aspiration lavants.

25. Installation de purification pour éliminer des matières solides d'un liquide, notamment destiné à un circuit de lubrifiant - refroidissement (35)
- comportant au moins deux dispositifs de purification (1) selon au moins une des revendications 1 à 24,
- dans lequel les dispositifs de purification (1) sont raccordés en parallèle à un circuit (35) transportant le liquide,
- dans lequel un agencement de soupape d'amenée (40) est prévu, lequel permet de séparer l'admission (8) d'au moins un des dispositifs de purification (1) du circuit (35).

26. Installation de purification selon la revendication 25,
**caractérisée en ce que**
- chaque dispositif de purification (1) présente un raccordement (45), via lequel un milieu de rétro-lavage peut être introduit dans le dispositif de rétro-lavage (10) du dispositif de purification (1) respectif,
- les raccords (45) des dispositifs de purification (1) sont raccordés à une conduite d'alimentation (43) commune pour introduire le milieu de rétro-lavage.

27. Installation de purification selon la revendication 26,
**caractérisée en ce que**
la conduite d'alimentation (43) est raccordée aux échappements (9) des dispositifs de purification (1) ou communique avec ceux-ci.
